(19) Europäisches Patentamt / European Patent Office / Office européen des brevets

(11) **EP 4 478 630 A1**

(12) **EUROPEAN PATENT APPLICATION**
published in accordance with Art. 153(4) EPC

(43) Date of publication:
**18.12.2024 Bulletin 2024/51**

(21) Application number: **23773877.8**

(22) Date of filing: **21.03.2023**

(51) International Patent Classification (IPC):
**H04B 10/2563** (2013.01)    **H04J 14/02** (2006.01)

(52) Cooperative Patent Classification (CPC):
**H04B 10/2563; H04J 14/02**

(86) International application number:
**PCT/CN2023/082914**

(87) International publication number:
**WO 2023/179630 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.03.2022 CN 202210275920**

(71) Applicant: **Huawei Technologies Co., Ltd.**
**Shenzhen, Guangdong 518129 (CN)**

(72) Inventors:
• **LIU, Xiang**
  **Shenzhen, Guangdong 518129 (CN)**
• **WANG, Hongqi**
  **Shenzhen, Guangdong 518129 (CN)**
• **MI, Guangcan**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OPTICAL COMMUNICATION SYSTEM AND FIRST NODE**

(57) An optical communication system and a first node are provided, to resolve a problem of four-wave mixing in an optical communication system in the conventional technology, and may be used in a fronthaul communication system, another possible single-fiber bidirectional transmission system, or the like. The optical communication system includes the first node, a second node, and an optical fiber that connects the first node and the second node. The optical fiber is configured for transmission of N first-direction wavelength channels sent by the first node to the second node and N second-direction wavelength channels sent by the second node to the first node, where N is an integer greater than 2. A zero-dispersion wavelength ZDW of the optical fiber belongs to a ZDW region, and at least two first-direction wavelength channels and at least one second-direction wavelength channel are located in the ZDW region, or at least two second-direction wavelength channels and at least one first-direction wavelength channel are located in the ZDW region. Mixedly distributing the first-direction wavelength channel and the second-direction wavelength channel that are in the ZDW region can mitigate or suppress a four-wave mixing effect in the optical fiber.

Optical communication system

N first-direction wavelength channels

First node — Optical fiber — Second node

N second-direction wavelength channels

**FIG. 5**

**Description**

This application claims priority to Chinese Patent Application No. 202210275920.9, filed with the China National Intellectual Property Administration on March 21, 2022 and entitled "OPTICAL COMMUNICATION SYSTEM AND FIRST NODE", which is incorporated herein by reference in its entirety.

**TECHNICAL FIELD**

This application relates to the field of optical communication technologies, and in particular, to an optical communication system and a first node.

**BACKGROUND**

With rapid growth of communication services and user quantities, optical communication technologies quickly develop. A wavelength division multiplexing (wavelength division multiplexing, WDM) transmission technology is an effective way to upgrade and scale out an optical communication system. In the optical communication system, an optical signal is usually transmitted over an optical fiber. However, a zero-dispersion wavelength (zero-dispersion wavelength, ZDW) or a zero-dispersion frequency (ZDF) exists in the optical fiber, and the optical signal transmitted within the ZDW (or ZDF) or around the ZDW (or ZDF) is subject to serious four-wave mixing. As a result, the transmitted optical signal is distorted, thereby degrading performance of the optical communication system. The zero-dispersion wavelength means that group velocity dispersion (or referred to as group delay dispersion or second-order dispersion per unit length) of an optical fiber at the wavelength is 0. The group velocity dispersion means that a group velocity of light in a transparent medium is related to a frequency or a wavelength of the light. ZDF=C/ZDW, where C is the speed of light.

Currently, a commonly used manner of suppressing the four-wave mixing in the optical fiber is to reduce transmit power of a light source that sends an optical signal. In this manner, the four-wave mixing may be partial mitigated, but a power margin of the optical signal is also suppressed. In addition, for long-distance transmission, a serious four-wave mixing effect (or referred to as a four-wave mixing impairment) still exists in this manner.

In conclusion, how to mitigate or suppress the four-wave mixing effect in the optical communication system is a technical problem currently to be urgently resolved.

**SUMMARY**

This application provides an optical communication system and a first node, to mitigate or suppress four-wave mixing in an optical fiber.

According to a first aspect, this application provides an optical communication system. The optical communication system includes a first node, a second node, and an optical fiber used to connect the first node and the second node. A ZDW of the optical fiber belongs to a ZDW region, which may also be understood as that a ZDF of the optical fiber belongs to a ZDF region, where ZDF=C/ZDW, and C is the speed of light. The optical fiber is configured for transmission of N first-direction wavelength channels and N second-direction wavelength channels, where N is an integer greater than 2; at least two first-direction wavelength channels and at least one second-direction wavelength channel are located in the ZDW region, or at least two second-direction wavelength channels and at least one first-direction wavelength channel are located in the ZDW region, and the first-direction wavelength channel and the second-direction wavelength channel that are in the ZDW region are mixedly distributed; and the first-direction wavelength channel is a wavelength channel sent by the first node to the second node, and the second-direction wavelength channel is a wavelength channel sent by the second node to the first node.

That the first-direction wavelength channel and the second-direction wavelength channel that are in the ZDW region are mixedly distributed may also be understood as that, in the ZDW region, a quantity of consecutive adjacent first-direction wavelength channels is less than or equal to 2, and a quantity of consecutive adjacent second-direction wavelength channels is less than or equal to 2.

According to the foregoing solution, mixedly distributing the first-direction wavelength channel and the second-direction wavelength channel in the ZDW region not only helps increase spacings between wavelength channels transmitted in a same direction (that is, the first-direction wavelength channels or the second-direction wavelength channels), but also helps reduce a quantity of four-wave combinations that form four-wave mixing or eliminate four-wave mixing. The first-direction wavelength channel is used as an example. Based on a distribution manner in the conventional technology, three groups of first-direction wavelength channels may form the four-wave mixing. However, according to the solution of this application, a maximum of two groups of first-direction wavelength channels may form the four-wave mixing. Therefore, the foregoing solution can help mitigate or suppress a four-wave mixing effect, so that performance degradation of the optical communication system that is caused by the four-wave mixing can be suppressed.

In a possible implementation, ZDWs of different optical fibers may be different, and a range of a ZDW region to which a ZDW of a standard single-mode fiber belongs is [1300 nanometers, 1324 nanometers].

In a possible implementation, distribution of the N first-direction wavelength channels and the N second-direction wavelength channels meets any one or more of the following: The N first-direction wavelength channels exclude four symmetric first-direction wavelength channels whose center is located in the ZDW region; and the N second-direction wavelength channels exclude four symmetric second-direction wavelength channels whose center is located in the ZDW region.

In a design in which the N first-direction wavelength channels exclude the four symmetric first-direction wavelength channels whose center is located in the ZDW region, non-degenerate four-wave mixing (refer to the following explanation of the term) generated by the first-direction wavelength channels can be mitigated or suppressed. In a design in which the N second-direction wavelength channels exclude the four symmetric second-direction wavelength channels whose center is located in the ZDW region, non-degenerate four-wave mixing generated by the second-direction wavelength channels can be mitigated or suppressed.

In a possible implementation, the distribution of the N first-direction wavelength channels and the N second-direction wavelength channels meets any one or more of the following: The N first-direction wavelength channels exclude three first-direction wavelength channels that have a same spacing and of which at least two are located in the ZDW region; and the N second-direction wavelength channels exclude three second-direction wavelength channels that have a same spacing and of which at least two are located in the ZDW region.

In a design in which the N first-direction wavelength channels exclude the three first-direction wavelength channels that have the same spacing and of which at least two are located in the ZDW region, degenerate four-wave mixing (refer to the following explanation of the term) generated by the first-direction wavelength channels can be mitigated or suppressed. In a design in which the N second-direction wavelength channels exclude the three second-direction wavelength channels that have the same spacing and of which at least two are located in the ZDW region, non-degenerate four-wave mixing generated by the second-direction wavelength channels can be mitigated or suppressed.

To ensure normal transmission of wavelength channels in the optical fiber, spacings between the wavelength channels need to be controlled. If the wavelength spacings are excessively small, mutual interference may occur. If the wavelength spacings are excessively large, optical fiber utilization is reduced. In a possible implementation, a smallest frequency spacing between the N first-direction wavelength channels and the N second-direction wavelength channels that are mixedly distributed is equal to 800 gigahertz (GHz). In other words, the smallest frequency spacing between the 2N wavelength channels (including the N first-direction wavelength channels and the N second-direction wavelength channels) is equal to 800 GHz. It should be noted that the spacing between the wavelength channels may be represented by a frequency spacing, or may be represented by a wavelength spacing. Herein, an example in which the spacing is represented by the frequency spacing is used.

In another possible implementation, a smallest frequency spacing between the N first-direction wavelength channels and the N second-direction wavelength channels that are mixedly distributed is equal to 400 GHz.

Setting the smallest frequency spacing to 400 GHz can not only ensure the normal transmission of the wavelength channels in the optical fiber, but also fully use a spectrum, to help increase a transmission capacity of the optical fiber and improve utilization efficiency of an optical fiber resource.

For example, the following shows four distribution solutions of the N first-direction wavelength channels and the N second-direction wavelength channels. All the four distribution manners can mitigate or suppress the four-wave mixing effect in the optical fiber.

Solution 1: The N first-direction wavelength channels and the N second-direction wavelength channels are alternately distributed (or referred to as cross distribution).

In a possible implementation, the N first-direction wavelength channels have a same spacing, and the N second-direction wavelength channels have a same wavelength spacing. Further, the spacing between the first-direction wavelength channels is the same as the spacing between the second-direction wavelength channels.

An example in which N=6 is used below. The N first-direction wavelength channels and the N second-direction wavelength channels are distributed in ascending order of wavelengths as follows: a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, and a second-direction wavelength channel. It may also be understood as that the 12 wavelength channels in ascending order of wavelengths are as follows: A 1st wavelength channel is a first-direction wavelength channel, a 2nd wavelength channel is a second-direction wavelength channel, a 3rd wavelength channel is a first-direction wavelength channel, a 4th wavelength channel is a second-direction wavelength channel, a 5th wavelength channel is a first-direction wavelength channel, a 6th wavelength channel is a second-direction wavelength channel, a 7th wavelength channel is a first-direction wavelength channel, an 8th wavelength channel is a second-direction wavelength channel, a 9th wavelength channel is a first-direction wavelength channel, a 10th wavelength channel is a second-direction wavelength channel, an $11^{th}$ wavelength channel is a first-direction wavelength channel, and a $12^{th}$ wavelength channel is a second-direction wavelength channel.

Alternatively, the N first-direction wavelength channels and the N second-direction wavelength channels are distributed in ascending order of wavelengths as follows: a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, and a first-direction wavelength channel. In other words, the 12 wavelength channels in ascending order of wavelengths are as follows: A $1^{st}$ wavelength channel is a second-direction wavelength channel, a $2^{nd}$ wavelength channel is a first-direction wavelength channel, a $3^{rd}$ wavelength channel is a second-direction wavelength channel, a $4^{th}$ wavelength channel is a first-direction wavelength channel, a $5^{th}$ wavelength channel is a second-direction wavelength channel, a $6^{th}$ wavelength channel is a first-direction wavelength channel, a $7^{th}$ wavelength channel is a second-direction wavelength channel, an $8^{th}$ wavelength channel is a first-direction wavelength channel, a $9^{th}$ wavelength channel is a second-direction wavelength channel, a $10^{th}$ wavelength channel is a first-direction wavelength channel, an $11^{th}$ wavelength channel is a second-direction wavelength channel, and a $12^{th}$ wavelength channel is a first-direction wavelength channel.

According to Solution 1, the spacings between the N first-direction wavelength channels transmitted in a same direction are increased, thereby helping mitigate the four-wave mixing effect caused by the N first-direction wavelength channels. Similarly, the spacings between the N second-direction wavelength channels transmitted in a same direction are also increased, thereby helping mitigate the four-wave mixing caused by the N second-direction wavelength channels.

In a possible implementation, the N first-direction wavelength channels have different wavelength spacings, and/or the N second-direction wavelength channels have different wavelength spacings. Based on this, for example, the following shows three possible solutions, namely, Solution 2, Solution 3, and Solution 4.

In a design in which the N first-direction wavelength channels have the different wavelength spacings and/or the N second-direction wavelength channels have the different wavelength spacings, the four-wave mixing effect in the optical fiber can be further mitigated.

Solution 2: A sequence of a pair of wavelength channels in Solution 1 is changed.

An example in which N=6 is used below. The N first-direction wavelength channels and the N second-direction wavelength channels are distributed in ascending order of wavelengths as follows: a first-direction wavelength channel, a second-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, a second-direction wavelength channel, a first-direction wavelength channel, and a second-direction wavelength channel. It may also be understood that a $1^{st}$ wavelength channel is a first-direction wavelength channel, a $2^{nd}$ wavelength channel is a second-direction wavelength channel, a $3^{rd}$ wavelength channel is a first-direction wavelength channel, a $4^{th}$ wavelength channel is a second-direction wavelength channel, a $5^{th}$ wavelength channel is a first-direction wavelength channel, a $6^{th}$ wavelength channel is a second-direction wavelength channel, a $7^{th}$ wavelength channel is a second-direction wavelength channel, an $8^{th}$ wavelength channel is a first-direction wavelength channel, a $9^{th}$ wavelength channel is a first-direction wavelength channel, a $10^{th}$ wavelength channel is a second-direction wavelength channel, an $11^{th}$ wavelength channel is a first-direction wavelength channel, and a $12^{th}$ wavelength channel is a second-direction wavelength channel.

Alternatively, an example in which N=6 is used. The N first-direction wavelength channels and the N second-direction wavelength channels are distributed in ascending order of wavelengths as follows: a second-direction wavelength channel, a first-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel. It may also be understood that a $1^{st}$ wavelength channel is a second-direction wavelength channel, a $2^{nd}$ wavelength channel is a first-direction wavelength channel, a $3^{rd}$ wavelength channel is a second-direction wavelength channel, a $4^{th}$ wavelength channel is a first-direction wavelength channel, a $5^{th}$ wavelength channel is a second-direction wavelength channel, a $6^{th}$ wavelength channel is a first-direction wavelength channel, a $7^{th}$ wavelength channel is a first-direction wavelength channel, an $8^{th}$ wavelength channel is a second-direction wavelength channel, a $9^{th}$ wavelength channel is a second-direction wavelength channel, a $10^{th}$ wavelength channel is a first-direction wavelength channel, an $11^{th}$ wavelength channel is a second-direction wavelength channel, and a $12^{th}$ wavelength channel is a first-direction wavelength channel.

Solution 3: Sequences of two pairs of wavelength channels in Solution 1 are changed.

An example in which N=6 is used. The N first-direction wavelength channels and the N second-direction wavelength channels are distributed in ascending order of wavelengths as follows: a first-direction wavelength channel, a second-direction wavelength channel, a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, and a second-direction wavelength channel. It may also be understood that a 1st wavelength channel is a first-direction wavelength channel, a 2nd wavelength channel is a second-direction wavelength channel, a 3rd wavelength channel is a second-direction wavelength channel, a 4th wavelength channel is a first-direction wavelength channel, a 5th wavelength channel is a first-direction wavelength channel, a 6th wavelength channel is a second-direction wavelength channel, a 7th wavelength channel is a first-direction wavelength channel, an 8th wavelength channel is a second-direction wavelength channel, a 9th wavelength channel is a second-direction wavelength channel, a 10th wavelength channel is a first-direction wavelength channel, an 11th wavelength channel is a first-direction wavelength channel, and a 12th wavelength channel is a second-direction wavelength channel.

Alternatively, the N first-direction wavelength channels and the N second-direction wavelength channels are distributed in ascending order of wavelengths as follows: a second-direction wavelength channel, a first-direction wavelength channel, a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, and a first-direction wavelength channel. It may also be understood that a 1st wavelength channel is a second-direction wavelength channel, a 2nd wavelength channel is a first-direction wavelength channel, a 3rd wavelength channel is a first-direction wavelength channel, a 4th wavelength channel is a second-direction wavelength channel, a 5th wavelength channel is a second-direction wavelength channel, a 6th wavelength channel is a first-direction wavelength channel, a 7th wavelength channel is a second-direction wavelength channel, an 8th wavelength channel is a first-direction wavelength channel, a 9th wavelength channel is a first-direction wavelength channel, a 10th wavelength channel is a second-direction wavelength channel, an 11th wavelength channel is a second-direction wavelength channel, and a 12th wavelength channel is a first-direction wavelength channel.

Solution 4: Sequences of four pairs of wavelength channels in Solution 1 are changed.

An example in which N=6 is used. The N first-direction wavelength channels and the N second-direction wavelength channels are distributed in ascending order of wavelengths as follows: a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel. It may also be understood that a 1st wavelength channel is a first-direction wavelength channel, a 2nd wavelength channel is a second-direction wavelength channel, a 3rd wavelength channel is a second-direction wavelength channel, a 4th wavelength channel is a first-direction wavelength channel, a 5th wavelength channel is a second-direction wavelength channel, a 6th wavelength channel is a first-direction wavelength channel, a 7th wavelength channel is a first-direction wavelength channel, an 8th wavelength channel is a second-direction wavelength channel, a 9th wavelength channel is a second-direction wavelength channel, a 10th wavelength channel is a first-direction wavelength channel, an 11th wavelength channel is a second-direction wavelength channel, and a 12th wavelength channel is a first-direction wavelength channel.

Alternatively, the N first-direction wavelength channels and the N second-direction wavelength channels are distributed in ascending order of wavelengths as follows: a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a second-direction wavelength channel, a first-direction wavelength channel, and a second-direction wavelength channel. It may also be understood as that a 1st wavelength channel is a second-direction wavelength channel, a 2nd wavelength channel is a first-direction wavelength channel, a 3rd wavelength channel is a first-direction wavelength channel, a 4th wavelength channel is a second-direction wavelength channel, a 5th wavelength channel is a first-direction wavelength channel, a 6th wavelength channel is a second-direction wavelength channel, a 7th wavelength channel is a second-direction wavelength channel, an 8th wavelength channel is a first-direction wavelength channel, a 9th wavelength channel is a first-direction wavelength channel, a 10th wavelength channel is a second-direction wavelength channel, an 11th wavelength channel is a first-direction wavelength channel, and a 12th wavelength channel is a second-direction wavelength channel.

If five wavelength channels with longest wavelengths in the 12 wavelength channels are located in the ZDW region, distribution of the six first-direction wavelength channels in Solution 2, Solution 3, and Solution 4 all meets the following condition: The six first-direction wavelength channels exclude four symmetric first-direction wavelength channels whose center is located in the ZDW region, and the six first-direction wavelength channels exclude three first-direction wavelength channels that have a same spacing and of which at least two are located in the ZDW region. Distribution of the six second-direction wavelength channels all meets the following condition: The six second-direction wavelength channels exclude four symmetric second-direction wavelength channels whose center is located in the ZDW region, and the six second-direction wavelength channels exclude three second-direction wavelength channels that have a same spacing and of which at least two are located in the ZDW region. Therefore, Solution 2, Solution 3, and Solution 4 all can help mitigate or suppress the four-wave mixing in the optical fiber.

In a possible implementation, the first node includes N first optical transceivers and one first multiplexer/demultiplexer, and the second node includes N second optical transceivers and one second multiplexer/demultiplexer, where a first end of the first multiplexer/demultiplexer is connected to the N first optical transceivers, and a second end of the first multiplexer/demultiplexer is connected to an optical fiber between the first node and the second node; and a first end of the second multiplexer/demultiplexer is connected to the N second optical transceivers, and a second end of the second multiplexer/demultiplexer is connected to the optical fiber between the first node and the second node.

In a possible implementation, a quantity of ports at the first end of the first multiplexer/demultiplexer and a quantity of ports at the second end of the first multiplexer/demultiplexer are N: 1, and a quantity of ports at the first end of the second multiplexer/demultiplexer and a quantity of ports at the second end of the second multiplexer/demultiplexer are N: 1.

Transmitting the 2N wavelength channels (including the N first-direction wavelength channels and the N second-direction wavelength channels) through N ports of one multiplexer/demultiplexer (including the first multiplexer/demultiplexer and the second multiplexer/demultiplexer) helps save 50% ports of the multiplexer/demultiplexer.

In a possible implementation, one first optical transceiver corresponds to one first-direction wavelength channel and one second-direction wavelength channel, and the first-direction wavelength channel and the second-direction wavelength channel that correspond to the same first optical transceiver are adjacent to each other; and/or one second optical transceiver corresponds to one first-direction wavelength channel and one second-direction wavelength channel, and the first-direction wavelength channel and the second-direction wavelength channel that correspond to the same second optical transceiver are adjacent to each other In other words, the N first optical transceivers and the N second optical transceivers can implement transmission of the 2N wavelength channels (including the N first-direction wavelength channels and the N second-direction wavelength channels).

The first-direction wavelength channel and the second-direction wavelength channel that are adjacent to each other correspond to the same first optical transceiver, and/or the first-direction wavelength channel and the second-direction wavelength channel that are adjacent to each other correspond to the same second optical transceiver. This helps reduce a quantity of first optical transceivers and/or a quantity of second optical transceivers included in the optical communication system.

In a possible implementation, the first optical transceiver includes a first optical fiber circulator, and the second optical transceiver includes a second optical fiber circulator.

Because a structure of an optical fiber circulator is simple, the optical fiber circulator is used as an optical transceiver, to help reduce a size of the optical communication system.

In a possible implementation, the first node includes a distributed unit (distributed unit, DU) and/or a central unit (central unit, CU), and the second node includes an active antenna unit (active antenna unit, AAU).

According to a second aspect, this application provides a first node. The first node includes N first optical transceivers, the N first optical transceivers are configured to send N first-direction wavelength channels and receive N second-direction wavelength channels, and N is an integer greater than 2, where the N first-direction wavelength channels and the N second-direction wavelength channels are transmitted over an optical fiber, a ZDW of the optical fiber belongs to a ZDW region, at least two first-direction wavelength channels or at least two second-direction wavelength channels are located in the ZDW region, the first-direction wavelength channel and the second-direction wavelength channel that are in the ZDW region are mixedly distributed, the first-direction wavelength channel is a wavelength channel sent by the first node to a second node, and the second-direction wavelength channel is a wavelength channel sent by the second node to the first node.

In a possible implementation, the first node further includes a first multiplexer/demultiplexer, a first end of the first multiplexer/demultiplexer is connected to the N first optical transceivers, and a second end of the first multiplexer/demultiplexer is configured to connect to the optical fiber.

In a possible implementation, one first optical transceiver corresponds to one first-direction wavelength channel and one second-direction wavelength channel, and the first-direction wavelength channel and the second-direction wavelength channel that correspond to the same first optical transceiver are adjacent to each other.

In a possible implementation, the first optical transceiver includes a first optical fiber circulator.

In a possible implementation, a quantity of ports at the first end of the first multiplexer/demultiplexer and a quantity of ports at the second end of the first multiplexer/demultiplexer are N: 1.

According to a third aspect, this application provides a second node. The second node includes N second optical transceivers, the N second optical transceivers are configured to receive N first-direction wavelength channels and send N second-direction wavelength channels, and N is an integer greater than 2, where the N first-direction wavelength channels and the N second-direction wavelength channels are transmitted over an optical fiber, a ZDW of the optical fiber belongs to a ZDW region, at least two first-direction wavelength channels or at least two second-direction wavelength channels are located in the ZDW region, the first-direction wavelength channel and the second-direction wavelength channel that are in the ZDW region are mixedly distributed, the first-direction wavelength channel is a wavelength channel sent by a first node to the second node, and the second-direction wavelength channel is a wavelength channel sent by the second node to the first node.

In a possible implementation, the second node further includes a second multiplexer/demultiplexer, a first end of the second multiplexer/demultiplexer is connected to the N second optical transceivers, and a second end of the second multiplexer/demultiplexer is configured to connect to the optical fiber.

In a possible implementation, one second optical transceiver corresponds to one first-direction wavelength channel and one second-direction wavelength channel, and the first-direction wavelength channel and the second-direction wavelength channel that correspond to the same second optical transceiver are adjacent to each other.

In a possible implementation, the second optical transceiver includes a second optical fiber circulator.

In a possible implementation, a quantity of ports at the first end of the second multiplexer/demultiplexer and a quantity of ports at the second end of the second multiplexer/demultiplexer are N: 1.

For technical effects that can be achieved in any one of the second aspect and the third aspect, refer to the descriptions of beneficial effects in the first aspect. Details are not described herein again.

## BRIEF DESCRIPTION OF DRAWINGS

FIG. 1a is a diagram of a principle of non-degenerate four-wave mixing according to this application;
FIG. 1b is a diagram of a principle of degenerate four-wave mixing according to this application;
FIG. 2a is a diagram of a possible application scenario according to this application;
FIG. 2b is a diagram of another possible application scenario according to this application;
FIG. 3 is a diagram of wavelength channel distribution according to this application;
FIG. 4 is a diagram of a principle of generating four-wave mixing according to this application;
FIG. 5 is a diagram of an architecture of an optical communication system according to this application;
FIG. 6a is a diagram of wavelength channel distribution according to this application;
FIG. 6b is another diagram of wavelength channel distribution according to this application;
FIG. 7a is another diagram of wavelength channel distribution according to this application;
FIG. 7b is another diagram of wavelength channel distribution according to this application;
FIG. 8a is another diagram of wavelength channel distribution according to this application;
FIG. 8b is another diagram of wavelength channel distribution according to this application;
FIG. 9a is another diagram of wavelength channel distribution according to this application;
FIG. 9b is another diagram of wavelength channel distribution according to this application;
FIG. 10 is a diagram of a connection relationship between a first node and a second node according to this application;
FIG. 11 is a diagram of a structure of an optical fiber circulator according to this application; and
FIG. 12 is a diagram of a connection relationship between a first optical fiber circulator and a second optical fiber circulator according to this application.

## DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

1. Four-wave mixing (four-wave mixing, FWM)

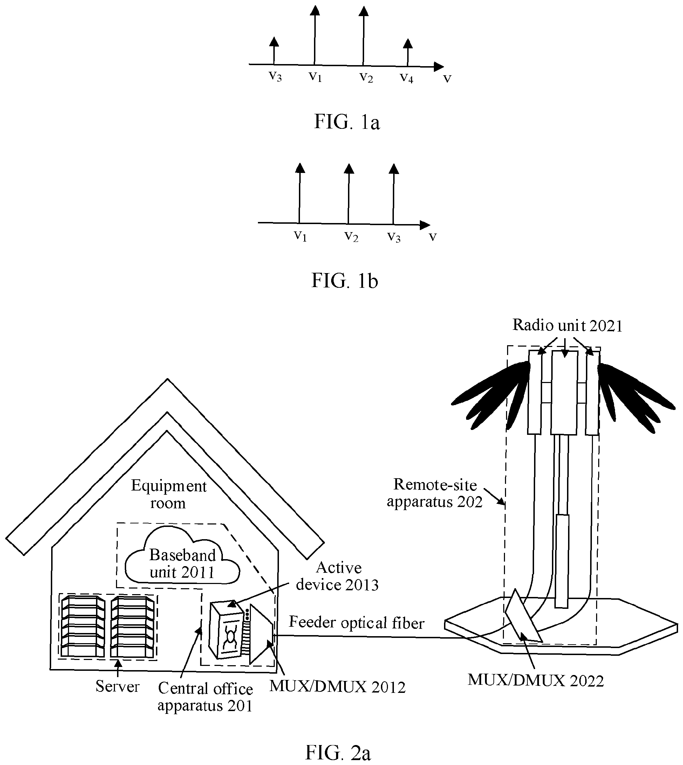

Four-wave mixing is a nonlinear effect based on third-order optical nonlinearity (described by an $X^{(3)}$ coefficient). The four-wave mixing may occur when light with at least two different frequencies (or wavelengths) propagates together in a nonlinear medium (for example, an optical fiber). Refer to FIG. 1a. Light with two frequencies of $v_1$ and $v_2$ ($v_2 > v_1$) is used as an example. Due to existence of refractive index modulation of a difference frequency, two new frequencies are generated: $v_3 = v_1 - (v_2 - v_1) = 2v_1 - v_2$ and $v_4 = v_2 + (v_2 - v_1) = 2v_2 - v_1$. Therefore, if light with a frequency of $v_3$ or $v_4$ exists originally, it indicates that frequencies $v_3$ and $v_4$ are increased, that is, a parametric increase is performed on light with the two frequencies, thereby affecting and interfering with the original light with the frequency of $v_3$ or $v_4$.

Refer to FIG. 1a. When four different frequencies (or wavelengths) are involved in four-wave mixing, the four-wave mixing is referred to as non-degenerate four-wave mixing (or referred to as non-degenerate four-wave mixing). Refer to FIG. 1b. When two of four frequencies involved in four-wave mixing overlap, the four-wave mixing is referred to as degenerate four-wave mixing.

A four-wave mixing effect is usually harmful in optical fiber communication. Particularly, in a wavelength division multiplexing technology, the four-wave mixing effect causes crosstalk between different wavelength channels and/or an imbalance in channel power.

2. Single-mode fiber

The single-mode fiber is an optical fiber that supports only one propagation mode (that is, distribution of a self-consistent electric field in the optical fiber) per polarization direction for a given wavelength. Usually, there is a small fiber core (with a diameter of, for example, several microns), and a refractive index difference between the fiber core and cladding is small. A mode radius (usually represented by a transverse extent of optical intensity distribution) is usually several microns ($\mu$m).

3. O band

In optical fiber communication, not light with all wavelengths is suitable for the optical fiber communication. A transmission loss in an optical fiber varies with a wavelength of light. Usually, light in a low-loss wavelength region (1260 nm to 1625 nm) is suitable for the optical fiber communication. The light in the low-loss wavelength region may be further divided into five bands: O band (1260 nm to 1360 nm), E band (1360 nm to 1460 nm), S band (1460 nm to 1530 nm), C band (1530 nm to 1565 nm), and L band (1565 nm to 1625 nm).
A standard single-mode fiber has low dispersion, minimum signal distortion, and a low loss in the O band. Therefore, nonlinearity of the standard single-mode fiber is difficult to be controlled. Some wavelengths may generate a significant four-wave mixing effect near a ZDW of the optical fiber.

4. Wavelength division multiplexing (wavelength division multiplexing, WDM)

Wavelength division multiplexing is a technology in which light with two or more different wavelengths (carrying various types of information) is converged together at a transmitting end via a multiplexer (also referred to as a multiplexer (multiplexer)), and is coupled to a same optical fiber for transmission. At a receiving end, the light with the various wavelengths is separated via a demultiplexer (also referred to as a demultiplexer or a demultiplexer (demultiplexer)), and then an optical receiver performs further processing to restore an original signal. The technology in which the light with the two or more different wavelengths is simultaneously transmitted in a same optical fiber is referred to as wavelength division multiplexing. The wavelength division multiplexing technology can increase a transmission capacity of the optical fiber.

5. Wavelength channel

An optical carrier with a given wavelength that carries a signal may be referred to as a wavelength channel. Wavelengths of optical carriers of different wavelength channels are different, and valid signals carried by the optical carriers of different wavelength channels may be the same or different.
The foregoing describes some terms used in this application, and the following describes possible application scenarios of this application.
FIG. 2a is a diagram of a possible application scenario according to this application. A fronthaul communication system in this application scenario is used as an example. The fronthaul communication system includes a central office apparatus 201, a remote-site apparatus (or referred to as a remote apparatus) 202, and an optical fiber used to connect the central office apparatus 201 and the remote-site apparatus 202. Different wavelength channels may be transmitted between the central office apparatus 201 and the remote-site apparatus 202 over the optical fiber. The optical fiber may also be referred to as a feeder optical fiber (or referred to as a feeder fiber or a fronthaul fiber). Usually, a length of the optical fiber is greater than 5 kilometers. For example, a direction in which a wavelength channel is transmitted from the central office apparatus 201 to the remote-site apparatus 202 may be referred to as a downlink direction, and a direction in which a wavelength channel is transmitted from the remote-site apparatus 202 to the central office apparatus 201 may be referred to as an uplink direction.
The central office apparatus 201 includes a baseband unit 2011 and a multiplexer/demultiplexer (multiplexer/demultiplexer, MUX/DMUX) 2012 (or referred to as a wavelength division multiplexer/demultiplexer, or a fronthaul aggregation unit (fronthaul aggregation unit, FAU), or a passive multiplexer/demultiplexer). The baseband unit 2011 is a communication apparatus or a functional module that has a baseband signal processing function. The baseband unit 2011 may be, for example, a CU+DU, or a baseband processing unit (baseband unit, BBU). The MUX/DMUX 2012 transmits the wavelength channel based on a WDM technology. Specifically, at least two types of wavelength channels with different wavelengths from the baseband unit 2011 are converged together via the multiplexer, coupled into the feeder optical fiber, and transmitted to the remote-site apparatus 202 over the feeder optical fiber; and/or the at least two types of wavelength channels with different wavelengths that are from the feeder optical fiber and that are converged together are separated via the demultiplexer, to obtain independent wavelength channels. Further, the central office apparatus 201 may include an active device 2013, where the active device 2013 includes but is not limited to an optical transport network (optical transport network, OTN). The OTN includes a series of optical network elements that are connected through optical fiber links, and can provide functions, including but not limited to transmission, multiplexing, routing, short-distance and long-distance transmission of an optical channel, and the like.

The remote-site apparatus 202 includes one or more radio units (radio units, RUs) 2021 and a MUX/DMUX 2022. The radio unit 2021 is a communication apparatus or a functional module that has a function of processing an intermediate frequency signal, a radio frequency signal, or an intermediate radio frequency signal. The radio unit 2021 may be, for example, an active antenna unit (active antenna unit, AAU) or a remote radio unit (remote radio unit, RRU). One end of the feeder optical fiber is connected to the MUX/DMUX 2012, and the other end of the feeder optical fiber is connected to the MUX/DMUX 2022. The MUX/DMUX 2022 also transmits the wavelength channel based on the WDM technology. Specifically, at least two types of wavelength channels with different wavelengths from the radio unit 2021 are converged together via the multiplexer, coupled into the feeder optical fiber, and transmitted to the central office apparatus 201 over the feeder optical fiber; and/or the at least two types of wavelength channels with different wavelengths that are from the feeder optical fiber and that are converged together are separated via the demultiplexer, to obtain independent wavelength channels. It should be noted that the multiplexer and the demultiplexer in the MUX/DMUX 2012 may be integrated together or may be two independent entities, and the multiplexer and the demultiplexer in the MUX/DMUX 2022 may be integrated together or may be two independent entities. This is not limited in this application.

In a possible implementation, the central office apparatus 201 may be disposed in an equipment room (or referred to as a central equipment room or a central office (central office, CO)), and the equipment room may further include a server and the like. The server is configured to perform calculation, information processing, and the like. The remote-site apparatus 202 is usually disposed on a station side.

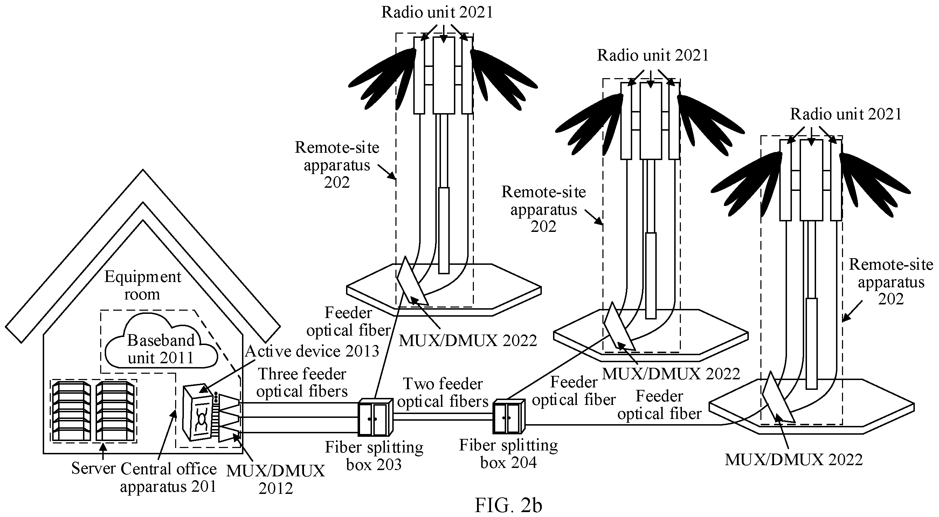

It may be understood that the fronthaul communication system may include a plurality of remote-site apparatuses 202 and a plurality of MUXs/DMUXs 2012. Refer to FIG. 2b. For example, three remote-site apparatuses 202 and three MUXs/DMUXs 2012 are included. Further, the fronthaul communication system may include two fiber splitting boxes: a fiber splitting box 203 and a fiber splitting box 204. A first end of the fiber splitting box 203 is separately connected to ends of the three MUXs/DMUXs 2012 in the central office apparatus 201 through three feeder optical fibers, and a second end of the fiber splitting box 203 is connected to a first end of the fiber splitting box 204 through two feeder optical fibers, and is connected to one remote-site apparatus 202 through one feeder optical fiber. A second end of the fiber splitting box 204 is separately connected to two remote-site apparatuses 202 through two feeder optical fibers.

It should be noted that the scenario provided above is to describe the technical solutions of this application more clearly, and does not constitute a limitation on the technical solutions provided in this application. The optical communication system provided in this application may be further used in a plurality of other possible scenarios, for example, may be further used in a possible short-distance communication system other than a radio access communication system based on centralized processing (centralized processing), collaborative radio (collaborative radio), and real-time cloud (real-time cloud) processing (which may be briefly referred to as a C-RAN system), specifically, for example, an ultra-reliable and low-latency communication (ultra-reliable and low-latency communication, URLLC) system, a highly synchronized metropolitan area access network system, a multi-access edge computing (Multi-access Edge Computing, MEC) system, or an intra-data center interconnect system.

In a possible implementation, the optical communication system in this application may support at least one of 50 gigabits per second (Gigabit/second, Gb/s) 4-level pulse amplitude modulation (PAM-4), non-return-to-zero (non-return-to-zero, NRZ) modulation, or polarization multiplexed coherent modulation, where Gb/s represents a transmission rate.

In a possible implementation, the fronthaul communication system may be, for example, a local area network (LAN) channel-based wavelength division multiplexing (LAN WDM) system, or another possible wavelength division multiplexing system. This is not listed one by one herein.

The following uses an LWDM system as an example. The LWDM may use 12 bands in an O band range from 1269 nm to 1332 nm. For center frequencies, center wavelengths, and wavelength ranges of the 12 bands in the LWDM system, refer to Table 1.

**Table 1 Distribution of 12 bands in an LWDM system defined in ITU-T G.owdm**

| Number | Center frequency Tera Hertz (Tera Hertz, THz) | Center wavelength (nm) | Wavelength range (nm) |
|--------|-----------------------------------------------|------------------------|-----------------------|
| 1 | 236.2 | 1269.23 | 1268.24 to 1270.22 |
| 2 | 235.4 | 1273.54 | 1272.55 to 1274.54 |
| 3 | 234.6 | 1277.89 | 1276.89 to 1278.89 |
| 4 | 233.8 | 1282.26 | 1281.25 to 1283.27 |
| 5 | 233.0 | 1286.66 | 1285.65 to 1287.68 |

(continued)

| Number | Center frequency Tera Hertz (Tera Hertz, THz) | Center wavelength (nm) | Wavelength range (nm) |
|---|---|---|---|
| 6 | 232.2 | 1291.10 | 1290.07 to 1292.12 |
| 7 | 231.4 | 1295.56 | 1294.53 to 1296.59 |
| 8 | 230.6 | 1300.05 | 1299.02 to 1301.09 |
| 9 | 229.8 | 1304.58 | 1303.54 to 1305.63 |
| 10 | 229.0 | 1309.14 | 1308.09 to 1310.19 |
| 11 | 228.2 | 1313.73 | 1312.67 to 1314.79 |
| 12 | 227.4 | 1318.35 | 1317.28 to 1319.42 |

In a possible implementation, the 12 wavelength channels in ascending order of wavelengths may be as follows: a 1st wavelength channel (Channel-1, CH1), a 2nd wavelength channel (Channel-2, CH2), a 3rd wavelength channel (Channel-3, CH3), a 4th wavelength channel (Channel-4, CH4), a 5th wavelength channel (Channel-5, CH5), a 6th wavelength channel (Channel-6, CH6), a 7th wavelength channel (Channel-7, CH7), an 8th wavelength channel (Channel-8, CH8), a 9th wavelength channel (Channel-9, CH9), a 10th wavelength channel (Channel-10, CH10), an 11th wavelength channel (Channel-11, CH11), and a 12th wavelength channel (Channel-12, CH12). In other words, CH1 represents the 1st wavelength channel, CH2 represents the 2nd wavelength channel, CH3 represents the 3rd wavelength channel, CH4 represents the 4th wavelength channel, CH5 represents the 5th wavelength channel, CH6 represents the 6th wavelength channel, CH7 represents the 7th wavelength channel, CH8 represents the 8th wavelength channel, CH9 represents the 9th wavelength channel, CH10 represents the 10th wavelength channel, CH11 represents the 11th wavelength channel, and CH12 represents the 12th wavelength channel.

With reference to FIG. 2a or FIG. 2b, six wavelength channels in the 12 wavelength channels are wavelength channels sent by the central office apparatus 201 to the remote-site apparatus 202, or it may be understood that the six wavelength channels are wavelength channels (which may be referred to as first-direction wavelength channels) received by the remote-site apparatus 202 from the central office apparatus 201, and a first direction is a downlink direction; and the other six wavelength channels are wavelength channels sent by the remote-site apparatus 202 to the central office apparatus 201, or may be understood as wavelength channels (which may be referred to as second-direction wavelength channels) received by the central office apparatus 201 from the remote-site apparatus 202, and a second direction is an uplink direction.

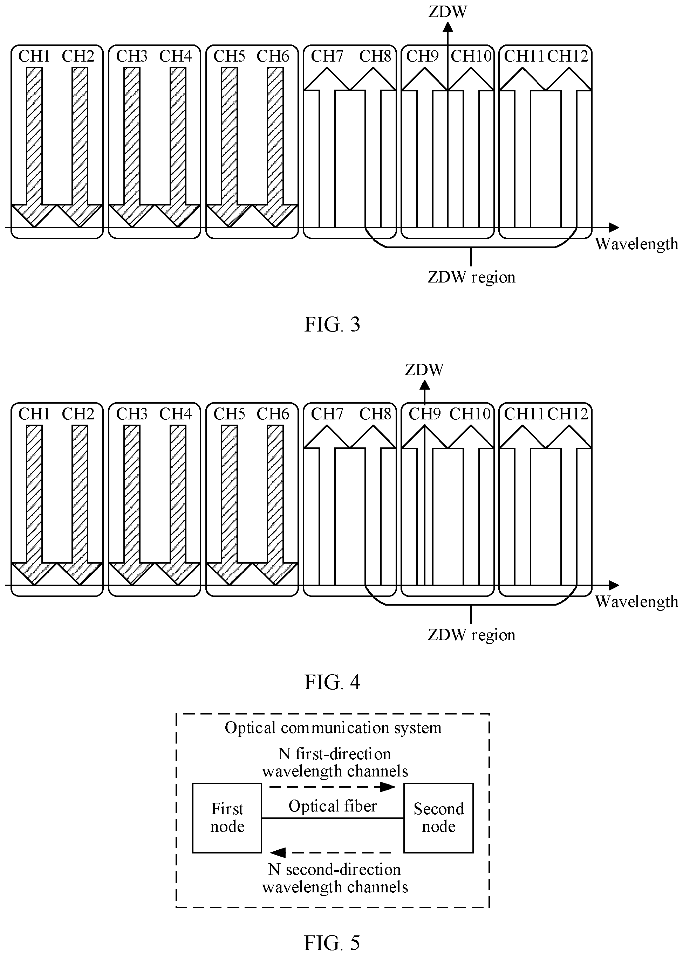

For possible wavelength channel distribution, refer to FIG. 3. Six first-direction wavelength channels and six second-direction wavelength channels are distributed in ascending order of wavelengths as follows: a first-direction wavelength channel (CH1), a first-direction wavelength channel (CH2), a first-direction wavelength channel (CH3), a first-direction wavelength channel (CH4), a first-direction wavelength channel (CH5), a first-direction wavelength channel (CH6), a second-direction wavelength channel (CH7), a second-direction wavelength channel (CH8), a second-direction wavelength channel (CH9), a second-direction wavelength channel (CH10), a second-direction wavelength channel (CH11), and a second-direction wavelength channel (CH12), that is, distribution of the first-direction wavelength channels may be represented as CH1-CH2-CH3-CH4-CH5-CH6, which are represented by downward arrows; and distribution of the second-direction wavelength channels may be represented as CH7-CH8-CH9-CH10-CH11-CH12, which are represented by upward arrows. Further, for example, the six first-direction wavelength channels and the six second-direction wavelength channels (the 12 wavelength channels in total) may correspond to six AAUs (that is, AAU1-AAU2-AAU3-AAU4-AAU5-AAU6), to be specific, CH1 is input into AAU1, CH2 is input into AAU2, CH3 is input into AAU3, CH4 is input into AAU4, CH5 is input into AAU5, and CH6 is input into AAU6. CH7 is output from AAU1, CH8 is output from AAU2, CH9 is output from AAU3, CH10 is output from AAU4, CH11 is output from AAU5, and CH12 is output from AAU6.

The distribution of the six first-direction wavelength channels and the six second-direction wavelength channels in FIG. 3 can generate a serious four-wave mixing effect. Specifically, if a ZDW of an optical fiber is between CH9 and CH10 (refer to FIG. 3), and CH8, CH9, CH10, CH11, and CH12 are located in a ZDW region to which the ZDW of the optical fiber belongs, it may be determined, based on the foregoing principle of generating four-wave mixing, that CH8, CH9, CH10, and CH11 that are transmitted in a same direction can interfere with (or impair) CH9 and CH10. Therefore, CH8, CH9, CH10, and CH11 can generate a serious four-wave mixing effect, and the four-wave mixing is non-degenerate four-wave mixing. In addition, CH7, CH9, CH10, and CH12 that are transmitted in a same direction can also impair CH9 and CH10, that is, CH7, CH9, CH10, and CH12 can also generate a serious four-wave mixing effect, and the four-wave mixing is also non-degenerate four-wave mixing. The four wavelength channels CH8, CH9, CH10, and CH11 have a same spacing, and the four wavelength channels CH7, CH9, CH10, and CH12 have different spacings. Therefore, the four wavelength channels that generate the non-degenerate four-wave mixing may have a same spacing or different spacings. In other words, regardless of whether the four wavelength channels transmitted in the same direction have a same spacing, the serious four-wave mixing effect may be generated.

FIG. 4 is a diagram of a principle of generating four-wave mixing according to this application. If a ZDW of an optical fiber is located in CH9, or it is understood that the ZDW of the optical fiber overlaps CH9, and CH8, CH9, CH10, CH11, and CH12 are located in a ZDW region to which the ZDW of the optical fiber belongs, it may be determined, based on the foregoing descriptions of the principle of generating four-wave mixing, that CH8, CH9, and CH10 that are transmitted in a same direction can generate a serious four-wave mixing effect, and the four-wave mixing is degenerate four-wave mixing. In addition, CH7, CH9, and CH11 that are transmitted in the same direction can generate a degenerate four-wave mixing effect.

It should be noted that the four-wave mixing may also occur on four wavelength channels outside the ZDW region that interact with each other. With reference to FIG. 3 or FIG. 4, for example, CH1, CH2, CH3, and CH4, or CH2, CH3, CH4, and CH5, or CH3, CH4, CH5, and CH6, or CH1, CH3, CH4, and CH6 can generate non-degenerate four-wave mixing. In addition, one wavelength channel may also be affected by a four-wave mixing effect generated by a plurality of groups of wavelength channels. For example, CH3 can be affected by the mixing effect generated by four groups of wavelength channels: CH1-CH2-CH3-CH4, CH2-CH3-CH4-CH5, CH3-CH4-CH5-CH6, and CH1-CH3-CH4-CH6.

In view of the foregoing problem, this application provides an optical communication system. The optical communication system can mitigate or suppress the four-wave mixing effect, thereby improving performance of the optical communication system.

Based on the foregoing content, the following describes, in detail with reference to FIG. 5, FIG. 6a, FIG. 6b, FIG. 7a, FIG. 7b, FIG. 8a, FIG. 8b, FIG. 9a, FIG. 9b, and FIG. 10 to FIG. 12, the optical communication system provided in this application.

FIG. 5 is a diagram of an architecture of an optical communication system according to this application. The optical communication system may include a first node, a second node, and an optical fiber used to connect the first node and the second node. The first node may be the central office apparatus 201 in FIG. 2a or FIG. 2b, and the second node may be the remote-site apparatus 202 in FIG. 2a or FIG. 2b. It should be noted that the first node may alternatively include more or fewer structures than those of the foregoing central office apparatus 201, and the second node may alternatively include more or fewer structures than those of the foregoing remote-site apparatus 202. This is not limited in this application. Alternatively, the first node may be the remote-site apparatus 202 in FIG. 2a or FIG. 2b, and the second node may be the central office apparatus 201 in FIG. 2a or FIG. 2b. It may be understood that the first node may alternatively include more or fewer structures than those of the foregoing remote-site apparatus 202, and the second node may alternatively include more or fewer structures than those of the foregoing central office apparatus 201. This is not limited in this application. A wavelength channel sent by the first node to the second node may be referred to as a first-direction wavelength channel, and a wavelength channel sent by the second node to the first node may be referred to as a second-direction wavelength channel. In other words, N first-direction wavelength channels are wavelength channels transmitted in a same direction, and N second-direction wavelength channels are wavelength channels transmitted in a same direction.

The optical fiber used to connect the first node and the second node may be referred to as a feeder optical fiber, and a ZDW of the optical fiber belongs to a ZDW region. For example, the optical fiber may be a standard single-mode fiber (standard single-mode fiber, SSMF), and a range of a ZDW region to which a ZDW of the standard single-mode fiber belongs is [1300 nm, 1324 nm]. It may also be understood that ZDWs of different optical fibers may be different, and a ZDW of a different standard single-mode fiber is a ZDW in a ZDW region to which the ZDW belongs. The optical fiber is configured for transmission of the N first-direction wavelength channels and the N second-direction wavelength channels, where N is an integer greater than 2. At least two first-direction wavelength channels and at least one second-direction wavelength channel are located in the ZDW region, or at least two second-direction wavelength channels and at least one first-direction wavelength channel are located in the ZDW region. That the first-direction wavelength channel and the second-direction wavelength channel that are in the ZDW region are mixedly distributed may also be understood as that, in the ZDW region, a quantity of consecutive adjacent first-direction wavelength channels is less than or equal to 2, and a quantity of consecutive adjacent second-direction wavelength channels is less than or equal to 2. Further, in some possible embodiments, at least two first-direction wavelength channels and at least two second-direction wavelength channels are located in the ZDW region, and the first-direction wavelength channels and the second-direction wavelength channels that are located in the ZDW region are mixedly distributed.

Based on the foregoing optical communication system, mixedly distributing the first-direction wavelength channel and the second-direction wavelength channel in the ZDW region not only helps increase spacings between wavelength channels transmitted in a same direction, but also helps reduce a quantity of four-wave combinations that form four-wave mixing or eliminate four-wave mixing. The first-direction wavelength channel is used as an example. Based on a distribution manner in the conventional technology, three groups of first-direction wavelength channels may form the four-wave mixing. However, based on the foregoing optical communication system, a maximum of two groups of first-direction wavelength channels may form the four-wave mixing. This helps mitigate or suppress a four-wave mixing effect, so that performance deterioration of the optical communication system that is caused by the four-wave mixing can be suppressed. Further, because a same optical fiber is configured for transmission of the first-direction wavelength channels and transmission of the second-direction wavelength channels, synchronization between the first node and the second node has good quality.

The structures shown in FIG. 5 are separately provided below, to provide an example solution for specific implementation.

1. Optical fiber

In a possible implementation, the optical fiber is configured for transmission of the N first-direction wavelength channels and the N second-direction wavelength channels. Intensity of a four-wave mixing effect in the optical fiber is related to a ZDW (or a ZDF) of the optical fiber, distribution of the N first-direction wavelength channels and the N second-direction wavelength channels, and the like.

For example, the following provides conditions met by the distribution of the N first-direction wavelength channels and the N second-direction wavelength channels, to mitigate or suppress the four-wave mixing effect in the optical fiber.

Condition 1: The wavelength channels transmitted in the same direction (the first-direction wavelength channels or the second-direction wavelength channels) exclude four symmetric wavelength channels whose center (or referred to as a symmetric axis or center) is located in the ZDW region.

The four symmetric wavelength channels mean that wavelengths (or frequencies) of the four wavelength channels are symmetric with respect to a wavelength center (or a frequency center) of the four wavelength channels. With reference to FIG. 1a, the frequency center of the four wavelength channels is a center of $v_1$ and $v_2$ (that is, $v_0=(v_1+v_2)/2$), and $v_1$, $v_2$, $v_3$, and $v_4$ are the four symmetric wavelength channels that are symmetric with respect to the frequency center v0. With reference to FIG. 3, CH8, CH9, CH10, and CH11 are used as an example. A wavelength center $\lambda 0$ of CH8, CH9, CH10, and CH11 overlaps the ZDW, and CH8, CH9, CH10, and CH11 are the four symmetric wavelength channels that are symmetric with respect to the wavelength center $\lambda 0$. To mitigate or suppress the four-wave mixing effect in the optical fiber, distribution like CH8, CH9, CH10, and CH11 does not exist in the wavelength channels transmitted in the same direction.

Specifically, the N first-direction wavelength channels exclude four symmetric first-direction wavelength channels whose center is located in the ZDW region; and/or the N second-direction wavelength channels exclude four symmetric second-direction wavelength channels whose center is located in the ZDW region.

Serious four-wave mixing can occur in the ZDW region of the optical fiber. If the distribution of the N first-direction wavelength channels and the N second-direction wavelength channels meets Condition 1, the four-wave mixing can be avoided in the ZDW region. Therefore, the distribution of the N first-direction wavelength channels and the N second-direction wavelength channels that meets Condition 1 may mitigate or suppress a non-degenerate four-wave mixing effect.

Further, the four-wave mixing includes a degenerate four-wave mixing effect. If the distribution of the N first-direction wavelength channels and the N second-direction wavelength channels meets Condition 2, the degenerate four-wave mixing effect may be mitigated or suppressed.

Condition 2: The wavelength channels transmitted in the same direction exclude three wavelength channels that have a same spacing and of which at least two are located in the ZDW region.

In a possible implementation, a spacing between wavelength channels may be represented by a frequency spacing, or may be represented by a wavelength spacing. With reference to FIG. 4, CH8, CH9, and CH10 are used as an example. Wavelength spacings between the three wavelength channels are the same, and CH8, CH9, and CH10 are all located in the ZDW region. To mitigate or suppress the four-wave mixing in the optical fiber, distribution like CH8, CH9, and CH10 does not exist in the wavelength channels transmitted in the same direction.

Specifically, the N first-direction wavelength channels exclude three first-direction wavelength channels that have a same spacing and of which at least two are located in the ZDW region; and/or the N second-direction wavelength channels exclude three second-direction wavelength channels that have a same spacing and of which at least two are located in the ZDW region. It may also be understood that the N first-direction wavelength channels exclude three first-direction wavelength channels that have a same spacing and of which two are located in the ZDW region; and/or the N second-direction wavelength channels exclude three second-direction wavelength channels that have a same spacing and of which two are located in the ZDW region.

It may be understood that, if the distribution of the N first-direction wavelength channels meets only Condition 1, a non-degenerate four-wave mixing effect in a first direction may be mitigated or suppressed. If the distribution of the N first-direction wavelength channels meets only Condition 2, a degenerate four-wave mixing effect in a first direction may be mitigated or suppressed. If the distribution of the N first-direction wavelength channels meets both Condition 1 and Condition 2, a non-degenerate four-wave mixing effect in a first direction can be mitigated or suppressed, and a degenerate four-wave mixing effect in the first direction can also be mitigated or suppressed. Similarly, the distribution of the N second-direction wavelength channels may also mitigate or suppress the non-degenerate four-wave mixing effect and/or the degenerate four-wave mixing effect. Details are not described herein again.

In a possible implementation, increasing spacings between adjacent wavelength channels, especially spacings between adjacent wavelength channels in the ZDW region can mitigate the four-wave mixing effect in the optical fiber.

It may be determined through simulation that due to impact of polarization mode dispersion (polarization mode dispersion, PMD), polarization states of wavelength channels that interact with each other change differently in a process of transmitting the wavelength channels over the optical fiber. In addition, the four-wave mixing effect is strongest when polarization states of wavelength channels that generate the four-wave mixing are the same. Therefore, if the polarization states of the wavelength channels that interact with each other are different, the four-wave mixing effect is mitigated. For example, a polarization mode dispersion coefficient of an optical fiber is 0.1 picoseconds/square root of kilometer ( $ps/\sqrt{km}$ ), wavelength channels are transmitted over a 5 km optical fiber, and an average differential group delay (differential group delay, DGD) caused by the polarization mode dispersion is approximately 0.22 ps. This indicates that in a 5 km transmission process, relative polarization of two wavelength channels with a spacing of approximately 4.5 THz changes by 360 degrees on average. It may also be understood as that when a spacing between two wavelength channels transmitted in a same direction is 4.5 THz, polarization states of the two wavelength channels change by 360 degrees on average, which can mitigate or suppress the four-wave mixing effect.

Based on this, when a spacing between two wavelength channels with a largest spacing in wavelength channels transmitted in a same direction is greater than or equal to 4.5 THz, Condition 1 and Condition 2 may be properly relaxed. For example, Condition 1 may be relaxed to Condition 3, and Condition 2 may be relaxed to Condition 4. With reference to FIG. 3, CH8, CH9, CH10, CH11, and CH12 are located in the ZDW region to which the ZDW of the optical fiber belongs. When a spacing between CH8 and CH12 is greater than or equal to 4.5 THz, Condition 1 may be relaxed to Condition 3, and Condition 2 may be relaxed to Condition 4, which may also mitigate or suppress the four-wave mixing in the optical fiber.

Condition 3: A spacing between two wavelength channels with a largest spacing in the wavelength channels transmitted in the same direction in the ZDW region is greater than or equal to a threshold, and the wavelength channels transmitted in the same direction are allowed to include a maximum of four symmetric wavelength channels whose center is located in the ZDW region.

The threshold may be, for example, greater than or equal to 4.5 THz.

Specifically, the N first-direction wavelength channels are allowed to include a maximum of four symmetric first-direction wavelength channels whose center is located in the ZDW region; and/or the N second-direction wavelength channels are allowed to include a maximum of four symmetric second-direction wavelength channels whose center is located in the ZDW region.

Condition 4: A spacing between two wavelength channels with a largest spacing in the wavelength channels transmitted in the same direction in the ZDW region is greater than or equal to a threshold, and the wavelength channels transmitted in the same direction are allowed to include a maximum of three wavelength channels that have a same spacing and of which at least two are located in the ZDW region.

Specifically, the N first-direction wavelength channels are allowed to include a maximum of three first-direction wavelength channels that have a same spacing and of which at least two are located in the ZDW region; and/or the N second-direction wavelength channels are allowed to include a maximum of three second-direction wavelength channels that have a same spacing and of which at least two are located in the ZDW region. It may also be understood as that the N first-direction wavelength channels are allowed to include a maximum of three first-direction wavelength channels that meet the following condition: The three first-direction wavelength channels have a same spacing, and at least two of the three first-direction wavelength channels that have the same spacing are located in the ZDW region; and/or the N second-direction wavelength channels are allowed to include a maximum of three second-direction wavelength channels that meet the following condition: The three second-direction wavelength channels have a same spacing, and at least two of the three second-direction wavelength channels that have the same spacing are located in the ZDW region.

To ensure that the wavelength channels are normally transmitted over the optical fiber, spacings between the wavelength channels need to be controlled. If the spacings are excessively small, mutual interference between the wavelength channels may occur. If the spacings are excessively large, optical fiber utilization is reduced. In a possible implementation, a smallest frequency spacing between the N first-direction wavelength channels and the N second-direction wavelength channels that are mixedly distributed is equal to 800 GHz. It may also be understood that the smallest frequency spacing between two adjacent wavelength channels in the 2N wavelength channels (including the N first-direction wavelength channels and the N second-direction wavelength channels) is equal to 800 GHz. In another possible implementation, a smallest frequency spacing between the N first-direction wavelength channels and the N second-direction wavelength channels that are mixedly distributed is equal to 400 GHz. It may also be understood that a smallest frequency spacing between two adjacent wavelength channels in the 2N wavelength channels (including the N first-direction wavelength channels and the N second-direction wavelength channels) is equal to 400 GHz. The two adjacent wavelength channels may be a first-direction wavelength channel and a first-direction wavelength channel, or may be a second-direction wavelength channel and a second-direction wavelength channel, or may be a first-direction wavelength channel and a second-direction wavelength channel. Setting the smallest frequency spacing to 400 GHz helps fully use a spectrum resource, and helps increase a transmission capacity of the optical fiber, thereby improving utilization efficiency of an optical fiber resource.

In a possible implementation, N may be 6, to be specific, the optical communication system may use 12 wavelength channels for transmission, and a spacing between adjacent wavelength channels obtained through mixing may be 400 GHz or 800 GHz. Alternatively, N may be equal to 12, to be specific, the optical communication system may use 24 wavelength channels for transmission, and a spacing between adjacent wavelength channels obtained through mixing may also be 400 GHz or 800 GHz. In this way, an aggregate capacity of the optical fiber may be further increased. It should be noted that N may alternatively have another value, and a specific value of N is not limited in this application.

For ease of further understanding of the solution, an example in which N=6, that is, six first-direction wavelength channels and six second-direction wavelength channels is used below for description. There are a total of 12 wavelength channels, and the 12 wavelength channels have 2^6=64 possible wavelength channel distribution solutions. For details, refer to Table 2. In Table 2, A indicates that in a pair of wavelength channels adjacent to each other (a first-direction wavelength channel and a second-direction wavelength channel that are adjacent to each other and that correspond to a same first optical transceiver may be referred to as a pair of wavelength channels, and a first-direction wavelength channel and a second-direction wavelength channel that are adjacent to each other and that correspond to a same second optical transceiver may also be referred to as a pair of wavelength channels. For details, refer to the following related descriptions), a wavelength of the first-direction wavelength channel is shorter than a wavelength of the second-direction wavelength channel; and B indicates that in a pair of wavelength channels adjacent to each other, a wavelength of a first-direction wavelength channel is longer than a wavelength of a second-direction wavelength channel. In other words, during distribution in ascending order of wavelengths, wavelength channel distribution represented by A is: a first-direction wavelength channel and a second-direction wavelength channel; and wavelength channel distribution represented by B is: a second-direction wavelength channel and a first-direction wavelength channel. 1 represents a first-direction wavelength channel, and 0 represents a second-direction wavelength channel.

**Table 2 Distribution of six first-direction wavelength channels and six second-direction wavelength channels**

| Number | Distribution of six pairs of wavelength channels | Distribution of 12 wavelength channels |
|---|---|---|
| 1 | AAAAAA | 101010101010 |
| 2 | AAAAAB | 101010101001 |
| 3 | AAAABA | 101010100110 |
| 4 | AAAABB | 101010100101 |
| 5 | AAABAA | 101010011010 |
| 6 | AAABAB | 101010011001 |
| 7 | AAABBA | 101010010110 |
| 8 | AAABBB | 101010010101 |
| 9 | AABAAA | 101001101010 |
| 10 | AABAAB | 101001101001 |
| 11 | AABABA | 101001100110 |
| 12 | AABABB | 101001100101 |
| 13 | AABBAA | 101001011010 |
| 14 | AABBAB | 101001011001 |
| 15 | AABBBA | 101001010110 |
| 16 | AABBBB | 101001010101 |
| 17 | ABAAAA | 100110101010 |
| 18 | ABAAAB | 100110101001 |
| 19 | ABAABA | 100110100110 |
| 20 | ABAABB | 100110100101 |
| 21 | ABABAA | 100110011010 |

(continued)

| Number | Distribution of six pairs of wavelength channels | Distribution of 12 wavelength channels |
|---|---|---|
| 22 | ABABAB | 100110011001 |
| 23 | ABABBA | 100110010110 |
| 24 | ABABBB | 100110010101 |
| 25 | ABBAAA | 100101101010 |
| 26 | ABBAAB | 100101101001 |
| 27 | ABBABA | 100101100110 |
| 28 | ABBABB | 100101100101 |
| 29 | ABBBAA | 100101011010 |
| 30 | ABBBAB | 100101011001 |
| 31 | ABBBBA | 100101010110 |
| 32 | ABBBBB | 100101010101 |
| 33 | BBBBBB | 010101010101 |
| 34 | BBBBBA | 010101010110 |
| 35 | BBBBAB | 010101011001 |
| 36 | BBBBAA | 010101011010 |
| 37 | BBBABB | 010101100101 |
| 38 | BBBABA | 010101100110 |
| 39 | BBBAAB | 010101101001 |
| 40 | BBBAAA | 010101101010 |
| 41 | BBABBB | 010110010101 |
| 42 | BBABBA | 010110010110 |
| 43 | BBABAB | 010110011001 |
| 44 | BBABAA | 010110011010 |
| 45 | BBAABB | 010110100101 |
| 46 | BBAABA | 010110100110 |
| 47 | BBAAAB | 010110101001 |
| 48 | BBAAAA | 010110101010 |
| 49 | BABBBB | 011001010101 |
| 50 | BABBBA | 011001010110 |
| 51 | BABBAB | 011001011001 |
| 52 | BABBAA | 011001011010 |
| 53 | BABABB | 011001100101 |
| 54 | BABABA | 011001100110 |
| 55 | BABAAB | 011001101001 |
| 56 | BABAAA | 011001101010 |
| 57 | BAABBB | 011010010101 |
| 58 | BAABBA | 011010010110 |
| 59 | BAABAB | 011010011001 |
| 60 | BAABAA | 011010011010 |

| Number | Distribution of six pairs of wavelength channels | Distribution of 12 wavelength channels |
|---|---|---|

(continued)

| Number | Distribution of six pairs of wavelength channels | Distribution of 12 wavelength channels |
| --- | --- | --- |
| 61 | BAAABB | 011010100101 |
| 62 | BAAABA | 011010100110 |
| 63 | BAAAAB | 011010101001 |
| 64 | BAAAAA | 011010101010 |

It should be noted that, compared with the distribution in FIG. 3 or FIG. 4, any one of the 64 types of mixed distribution of the 12 wavelength channels provided in Table 2 may mitigate or suppress the four-wave mixing. To further mitigate or suppress the four-wave mixing in the optical fiber, the N first-direction wavelength channels and the N second-direction wavelength channels further need to meet Condition 3 and/or Condition 4. To further mitigate or suppress the four-wave mixing in the optical fiber, the N first-direction wavelength channels and the N second-direction wavelength channels further need to meet Condition 1 and/or Condition 2.

For example, with reference to Table 2, an example in which N=6 is used below to provide four solutions for distribution of the six first-direction wavelength channels and the six second-direction wavelength channels. In the four solutions, the distribution of the six first-direction wavelength channels and the six second-direction wavelength channels meets Condition 1 and Condition 2, so that the four-wave mixing effect can be effectively mitigated or suppressed.

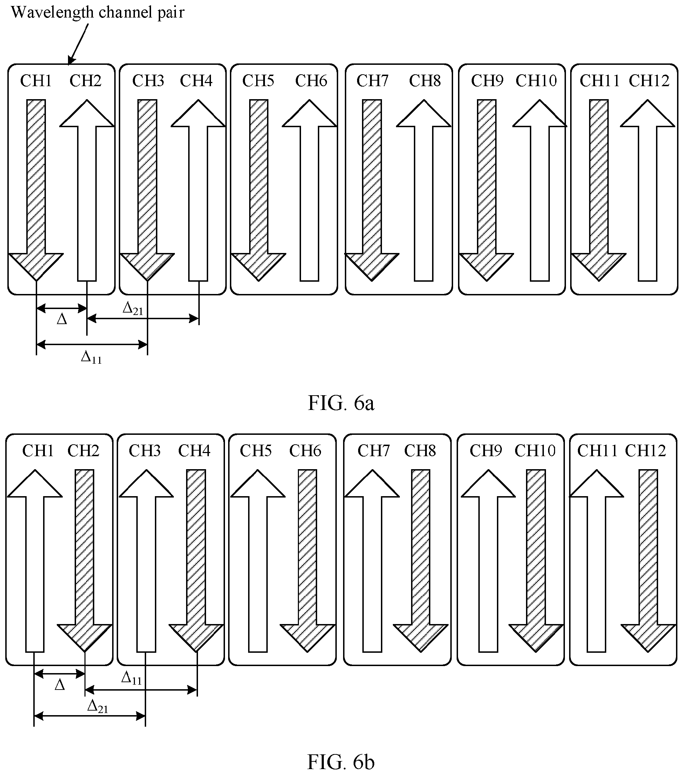

In the following descriptions, a first-direction wavelength channel and a second-direction wavelength channel in each rectangular box in FIG. 6a, FIG. 6b, FIG. 7a, FIG. 7b, FIG. 8a, FIG. 8b, FIG. 9a, and FIG. 9b may be referred to as a wavelength channel pair.

Solution 1: The six first-direction wavelength channels and the six second-direction wavelength channels are alternately distributed (or referred to as cross distribution).

It may also be understood as that a second-direction wavelength channel is adjacent to a first-direction wavelength channel, and a first-direction wavelength channel is adjacent to a second-direction wavelength channel.

In a possible implementation, the six first-direction wavelength channels have a same spacing $\Delta_{11}$, and the six second-direction wavelength channels have a same wavelength spacing $\Delta_{21}$. Further, the wavelength spacing $\Delta_{11}$ between the first-direction wavelength channels is the same as the wavelength spacing between the second-direction wavelength channels. For details, refer to FIG. 6a.

Based on whether in a wavelength channel pair, a wavelength of a first-direction wavelength channel is longer or shorter than that of a second-direction wavelength channel, the following two solutions may also be included.

Solution 1.1: In a wavelength channel pair, a wavelength of a first-direction wavelength channel is shorter than a wavelength of a second-direction wavelength channel.

FIG. 6a is a diagram of wavelength channel distribution according to this application. The diagram of the wavelength channel distribution corresponds to Number 1 in Table 2. CH1 and CH2 adjacent to each other form a wavelength channel pair, CH3 and CH4 adjacent to each other form a wavelength channel pair, CH5 and CH6 adjacent to each other form a wavelength channel pair, CH7 and CH8 adjacent to each other form a wavelength channel pair, CH9 and CH10 adjacent to each other form a wavelength channel pair, and CH11 and CH12 adjacent to each other form a wavelength channel pair. The six first-direction wavelength channels and the six second-direction wavelength channels are distributed in ascending order of wavelengths as follows: a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, and a second-direction wavelength channel. Alternatively, distribution of the six first-direction wavelength channels is a 1st, a 3rd, a 5th, a 7th, a 9th, and an 11th wavelength channels, and may be represented as: CH1-CH3-CH5-CH7-CH9-CH11; and distribution of the six second-direction wavelength channels is a 2nd, a 4th, a 6th, an 8th, a 10th, and a 12th wavelength channels, and may be represented as: CH2-CH4-CH6-CH8-CH10-CH12.

In Solution 1.1, distribution of a group of first-direction wavelength channels (namely, CH6-CH8-CH10-CH12) that may cause serious non-degenerate four-wave mixing exists. However, a spacing between every two adjacent first-direction wavelength channels in the N first-direction wavelength channels is one time larger than that in FIG. 3, and a four-wave mixing effect can also be mitigated by increasing the spacing between the wavelength channels. Therefore, based on the distribution in Solution 1.1, the four-wave mixing effect of the N first-direction wavelength channels in the optical fiber can be mitigated. Similarly, the four-wave mixing effect (or referred to as four-wave mixing impairment) of the N second-direction wavelength channels in the optical fiber can also be mitigated.

Solution 1.2: In a wavelength channel pair, a wavelength of a first-direction wavelength channel is longer than a wavelength of a second-direction wavelength channel.

FIG. 6b is another diagram of wavelength channel distribution according to this application. The diagram of the wavelength channel distribution corresponds to Number 33 in Table 2. For descriptions of a wavelength channel pair, refer to the descriptions in Solution 1.1. Details are not described herein again. The six first-direction wavelength channels and the six second-direction wavelength channels are distributed in ascending order of wavelengths as follows: a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, and a first-direction wavelength channel. In other words, a distribution manner of the six first-direction wavelength channels is: CH2-CH4-CH6-CH8-CH10-CH12, that is, distribution of the six first-direction wavelength channels is a $2^{nd}$, a $4^{th}$, a $6^{th}$, an $8^{th}$, a $10^{th}$, and a $12^{th}$ wavelength channel. A distribution manner of the six second-direction wavelength channels is: CH1-CH3-CH5-CH7-CH9-CH11, that is, distribution of the six second-direction wavelength channels is a $1^{st}$, a $3^{rd}$, a $5^{th}$, a $7^{th}$, a $9^{th}$, and an $11^{th}$ wavelength channel.

According to Solution 1.2, a four-wave mixing effect of the N first-direction wavelength channels and the N second-direction wavelength channels in the optical fiber may also be mitigated. For detailed analysis, refer to the descriptions of Solution 1.1. Details are not described herein again.

In a possible implementation, a spacing $\Delta$ between adjacent wavelength channels (namely, a first-direction wavelength channel and a second-direction wavelength channel) that are mixedly distributed is equal to 800 GHz. With reference to FIG. 6a or FIG. 6b, a spacing $\Delta$ between CH1 and CH2 is equal to 800 GHz, and a spacing $\Delta$ between CH2 and CH3 is also equal to 800 GHz. Alternatively, a spacing $\Delta$ between two adjacent wavelength channels (namely, a first-direction wavelength channel and a second-direction wavelength channel) that are mixedly distributed is equal to 400 GHz. With reference to FIG. 6a, a spacing $\Delta$ between CH1 and CH2 is equal to 400 GHz, and a spacing $\Delta$ between CH2 and CH3 is also equal to 400 GHz.

Further, in FIG. 6a or FIG. 6b, a spacing $\Delta_{11}$ between adjacent first-direction wavelength channels is twice the spacing $\Delta$ between the adjacent wavelength channels that are mixedly distributed, and a spacing $\Delta_{21}$ between adjacent second-direction wavelength channels is twice the spacing $\Delta$ between the adjacent wavelength channels that are mixedly distributed.

Solution 2: Spacings between six wavelength channels transmitted in a same direction are different. Specifically, a first-direction wavelength channel and a second-direction wavelength channel in a wavelength channel pair in FIG. 6a or FIG. 6b are transposed (or reversed).

Specifically, spacings between the six first-direction wavelength channels are different, and spacings between the six second-direction wavelength channels are different. Further, spacings between first-direction wavelength channels located in the ZDW region in the six first-direction wavelength channels are different, and spacings between second-direction wavelength channels located in the ZDW region in the six second-direction wavelength channels are different.

Based on whether in a $1^{st}$ wavelength channel pair, a wavelength of a first-direction wavelength channel is longer or shorter than that of a second-direction wavelength channel, the following two solutions may also be included.

Solution 2.1: A wavelength of a first-direction wavelength channel is shorter than a wavelength of a second-direction wavelength channel.

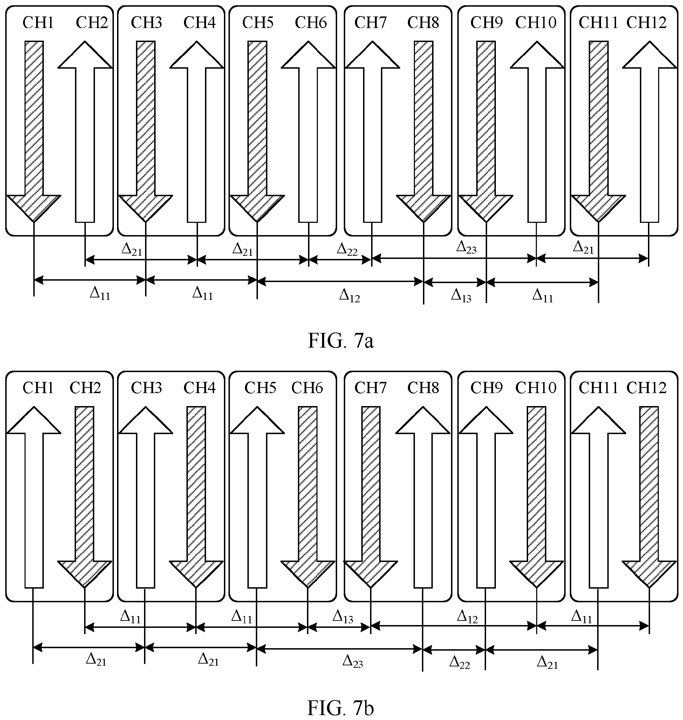

FIG. 7a is another diagram of wavelength channel distribution according to this application. The diagram of the wavelength channel distribution corresponds to Number 5 in Table 2. For descriptions of a wavelength channel pair, refer to the descriptions in Solution 1.1. Details are not described herein again. The six first-direction wavelength channels and the six second-direction wavelength channels are distributed in ascending order of wavelengths as follows: a first-direction wavelength channel, a second-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, a second-direction wavelength channel, a first-direction wavelength channel, and a second-direction wavelength channel. Alternatively, a distribution manner of the six first-direction wavelength channels is: CH1-CH3-CH5-CH8-CH9-CH11, and a distribution manner of the six second-direction wavelength channels is: CH2-CH4-CH6-CH7-CH10-CH12. It may be understood that FIG. 7a is equivalent to changing a sequence of the first direction of CH7 and the second direction of CH8 in FIG. 6a. Specifically, the $7^{th}$ wavelength channel in FIG. 6a is a first-direction wavelength channel, and a $7^{th}$ wavelength channel in FIG. 7a is a second-direction wavelength channel. The $8^{th}$ wavelength channel in FIG. 6a is a second-direction wavelength channel, and an $8^{th}$ wavelength channel in FIG. 7a is a first-direction wavelength channel.

Further, wavelength spacings between the six first-direction wavelength channels are different, and wavelength spacings between the six second-direction wavelength channels are also different. Refer to FIG. 7a. Wavelength spacings between the six first-direction wavelength channels have three values: $\Delta_{11}$, $\Delta_{12}$, and $\Delta_{13}$, and wavelength spacings between the six second-direction wavelength channels also have three values: $\Delta_{21}$, $\Delta_{22}$, and $\Delta_{23}$. Further, spacings between first-direction wavelength channels located in the ZDW region in the six first-direction wavelength channels are different, and spacings between second-direction wavelength channels located in the ZDW region in the six second-direction wavelength channels are different.

With reference to Table 1, a ZDW region to which a ZDW of a standard single-mode fiber belongs is used as an example. Because CH8, CH9, CH10, CH11, and CH12 are located in the ZDW region, directions of CH7 and CH8 may be reversed, to help further mitigate four-wave mixing.

Usually, wavelength channels are distributed in ascending order of wavelengths. Five wavelength channels (namely, CH8, CH9, CH10, CH11, and CH12) with the longest wavelengths in the 12 wavelength channels are located in the ZDW region. Therefore, transposing a first direction and a second direction of wavelength channels located in the ZDW region helps further mitigate or suppress the four-wave mixing. Further, CH8, CH9, and CH11 are located in the ZDW region, and the three first-direction wavelength channels do not generate the four-wave mixing. In addition, the six first-direction wavelength channels meet the following condition: The six first-direction wavelength channels exclude four symmetric first-direction wavelength channels whose center is located in the ZDW region, and the six first-direction wavelength channels exclude three first-direction wavelength channels that have a same spacing and of which at least two are located in the ZDW region. Further, second-direction wavelength channels located in the ZDW region are CH10 and CH12, and the two second-direction wavelength channels do not generate the four-wave mixing either. In addition, the six second-direction wavelength channels also meet the following condition: The six second-direction wavelength channels exclude four symmetric second-direction wavelength channels whose center is located in the ZDW region, and exclude three second-direction wavelength channels that have a same spacing and of which at least two are located in the ZDW region. In other words, the distribution of the N first-direction wavelength channels and the N second-direction wavelength channels according to Solution 2.1 meets Condition 1 and Condition 2. Therefore, the wavelength channel distribution according to Solution 2.1 helps further mitigate or suppress a four-wave mixing effect.

It should be noted that, in the 12 wavelength channels distributed according to Solution 2.1, the six first-direction wavelength channels still include four symmetric first-direction wavelength channels, namely, CH1, CH3, CH9, and CH11 (CH9 and CH11 are in the ZDW region). However, a center of the four symmetric first-direction wavelength channels is located between CH6 and CH7. Therefore, the four-wave mixing effect generated is weak. Similarly, the six second-direction wavelength channels also still include four symmetric second-direction wavelength channels, namely, CH2, CH4, CH10, and CH12. A center of the four symmetric second-direction wavelength channels is located between CH6 and CH7. Therefore, the four-wave mixing effect generated is weak.

Solution 2.2: A wavelength of a first-direction wavelength channel is longer than a wavelength of a second-direction wavelength channel.

FIG. 7b is another diagram of wavelength channel distribution according to this application. The diagram of the wavelength channel distribution corresponds to Number 37 in Table 2. For descriptions of a wavelength channel pair, refer to the descriptions in Solution 1.1. Details are not described herein again. The six first-direction wavelength channels and the six second-direction wavelength channels are distributed in ascending order of wavelengths as follows: a second-direction wavelength channel, a first-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel. Alternatively, a distribution manner of the six first-direction wavelength channels is: CH2-CH4-CH6-CH7-CH10-CH12, and a distribution manner of the six second-direction wavelength channels is: CH1-CH3-CH5-CH8-CH9-CH11. It may be understood that FIG. 7b is equivalent to reversing the first direction of CH7 and the second direction of CH8 in FIG. 6b. Specifically, the 7th wavelength channel in FIG. 6b is a second-direction wavelength channel, and a 7th wavelength channel in FIG. 7b is a first-direction wavelength channel. The 8th wavelength channel in FIG. 6b is a first-direction wavelength channel, and an 8th wavelength channel in FIG. 7b is a second-direction wavelength channel.

The distribution of the six first-direction wavelength channels and the six second-direction wavelength channels according to Solution 2.2 may also mitigate or suppress a four-wave mixing effect in an optical fiber. For detailed analysis, refer to the descriptions of Solution 2.1. Details are not described herein again.

It should be noted that, in the 12 wavelength channels distributed according to Solution 2.2, the six second-direction wavelength channels still include four symmetric second-direction wavelength channels, namely, CH1, CH3, CH9, and CH11. However, a center of the four symmetric second-direction wavelength channels is located between CH6 and CH7, and spacings between the four symmetric second-direction wavelength channels are large. Therefore, the four-wave mixing effect generated is weak. Similarly, the six first-direction wavelength channels also include four symmetric first-direction wavelength channels, namely, CH2, CH4, CH10, and CH12. A center of the four symmetric first-direction wavelength channels is located between CH6 and CH7, and spacings between the four symmetric first-direction wavelength channels are also large. Therefore, the four-wave mixing effect generated is weak.

According to Solution 2, transmission of neither the six first-direction wavelength channels nor the six second-direction wavelength channels over the optical fiber can cause serious non-degenerate four-wave mixing (that is, non-degenerate four-wave mixing). According to theoretical simulation, the distribution according to Solution 2 can reduce performance deterioration caused by four-wave mixing by approximately 20 times compared with the distribution (configuration) in FIG. 3. Further, when the four-wave mixing is suppressed by 20 times, the four-wave mixing of less than 0.5 decibel (dB) can be achieved after transmission over a 10 km optical fiber based on a 12-channel 25 Gb/s NRZ-modulated LWDM system; and the performance deterioration is less than 2 dB after the transmission over the 10 km optical fiber based on a 12-channel 50 Gb/s PAM-4-modulated LWDM system. In this way, an aggregate capacity of the optical fiber can be increased from 300 Gb/s to 600 Gb/s. The LWDM system can also use polarization multiplexed coherent modulation to achieve a single-wavelength channel rate of 100 Gb/s or higher.

Solution 3: Spacings between six wavelength channels transmitted in a same direction are different. Specifically, first directions and second directions in two wavelength channel pairs in FIG. 6a or FIG. 6b are reversed (or transposed).

Based on this, wavelength spacings between the six first-direction wavelength channels are different, and wavelength spacings between the six second-direction wavelength channels are different. Further, spacings between first-direction wavelength channels located in the ZDW region in the six first-direction wavelength channels are different, and spacings between second-direction wavelength channels located in the ZDW region in the six second-direction wavelength channels are different.

Based on whether in a 1st wavelength channel pair, a wavelength of a first-direction wavelength channel is longer or shorter than that of a second-direction wavelength channel, the following two solutions may also be included.

Solution 3.1: A wavelength of a first-direction wavelength channel is shorter than a wavelength of a second-direction wavelength channel.

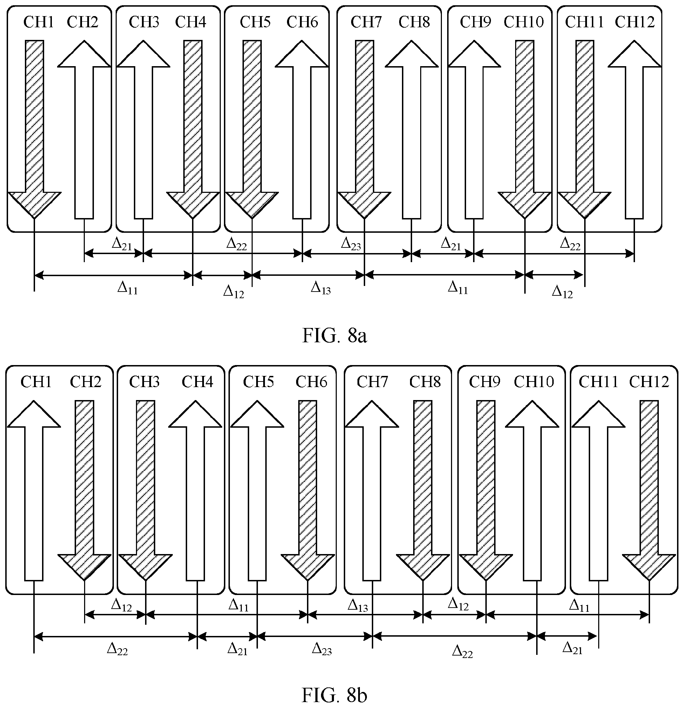

FIG. 8a is another diagram of wavelength channel distribution according to this application. The diagram of the wavelength channel distribution corresponds to Number 19 in Table 2. The six first-direction wavelength channels and the six second-direction wavelength channels are distributed in ascending order of wavelengths as follows: a first-direction wavelength channel, a second-direction wavelength channel, a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, and a second-direction wavelength channel. Alternatively, a distribution manner of the six first-direction wavelength channels is: CH1-CH4-CHS-CH7-CH10-CH11, and a distribution manner of the six second-direction wavelength channels is: CH2-CH3-CH6-CH8-CH9-CH12. For descriptions of a wavelength channel pair, refer to the descriptions in Solution 1.1. Details are not described herein again. It may be understood that FIG. 8a is equivalent to transposing the first direction of CH3 and the second direction of CH4 in FIG. 6a, and transposing the first direction of CH9 and the second direction of CH10 in FIG. 6a.

For example, CH8, CH9, CH10, CH11, and CH12 are located in the ZDW region. In the ZDW region, second-direction wavelength channels include an 8th, a 9th, and a 12th wavelength channels, and the three second-direction wavelength channels do not generate four-wave mixing; and first-direction wavelength channels include a 10th and an 11th wavelength channels, and the two first-direction wavelength channels do not generate the four-wave mixing. In addition, the six first-direction wavelength channels meet the following condition: The six first-direction wavelength channels exclude four symmetric first-direction wavelength channels whose center is located in the ZDW region, and also exclude three first-direction wavelength channels that have a same spacing and of which at least two are located in the ZDW region. The six second-direction wavelength channels meet the following condition: The six second-direction wavelength channels exclude four symmetric second-direction wavelength channels whose center is located in the ZDW region, and also exclude three second-direction wavelength channels that have a same spacing and of which at least two are located in the ZDW region. It may also be understood as that the distribution of the six first-direction wavelength channels and the six second-direction wavelength channels according to Solution 3.1 meets Condition 1 and Condition 2. Therefore, the distribution according to Solution 3.1 helps further mitigate or suppress a four-wave mixing effect.

It should be noted that, in the 12 wavelength channels distributed according to Solution 3.1, the six first-direction wavelength channels include four symmetric first-direction wavelength channels, namely, CH1, CH4, CH7, and CH10. A center of the four symmetric first-direction wavelength channels is located between CH5 and CH6. Therefore, the four-wave mixing effect generated is weak. Further, the six first-direction wavelength channels include four symmetric first-direction wavelength channels, namely, CH4, CH5, CH10, and CH11. A center of the four symmetric first-direction wavelength channels is located between CH7 and CH8. Therefore, the four-wave mixing effect generated is weak. Similarly, the N second-direction wavelength channels also include four symmetric second-direction wavelength channels, namely, CH2, CH3, CH8, and CH9. A center of the four symmetric second-direction wavelength channels is located between CH5 and CH6. Therefore, the four-wave mixing effect generated is weak. Further, the N second-direction wavelength channels include four symmetric second-direction wavelength channels, namely, CH3, CH6, CH9, and CH12. A center of the four symmetric second-direction wavelength channels is located between CH7 and CH8. Therefore, the four-wave mixing effect generated is weak.

Solution 3.2: A wavelength of a first-direction wavelength channel is longer than a wavelength of a second-direction wavelength channel.

FIG. 8b is another diagram of wavelength channel distribution according to this application. The diagram of the wavelength channel distribution corresponds to Number 51 in Table 2. The six first-direction wavelength channels and the six second-direction wavelength channels are distributed in ascending order of wavelengths as follows: a second-direction wavelength channel, a first-direction wavelength channel, a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, and a first-direction wavelength channel. Alternatively, a distribution manner of the six first-direction wavelength channels is: CH2-CH3-CH6-CH8-CH9-CH12, and a distribution manner of the six second-direction wavelength channels is: CH1-CH4-CH5-CH7-CH10-CH11. It may be understood that FIG. 8b is equivalent to reversing the first direction of CH3 and the second direction of CH4 in FIG. 6b, and reversing the first direction of CH9 and the second direction of CH10 in FIG. 6b.

The distribution of the six first-direction wavelength channels and the six second-direction wavelength channels according to Solution 3.2 may also mitigate or suppress a four-wave mixing effect in an optical fiber. For detailed analysis, refer to the descriptions of Solution 3.1. Details are not described herein again.

It should be noted that, in the 12 wavelength channels distributed according to Solution 3.2, the six second-direction wavelength channels include four symmetric second-direction wavelength channels, namely, CH1, CH4, CH7, and CH10. A center of the four symmetric second-direction wavelength channels is located between CH5 and CH6, and spacings between the four symmetric second-direction wavelength channels are large. Therefore, the four-wave mixing effect generated is weak. Further, the six second-direction wavelength channels include four symmetric second-direction wavelength channels, namely, CH4, CH5, CH10, and CH11. A center of the four symmetric second-direction wavelength channels is located between CH7 and CH8, and spacings between the four symmetric second-direction wavelength channels are large. Therefore, the four-wave mixing effect generated is weak. Similarly, the N first-direction wavelength channels also include four symmetric first-direction wavelength channels, namely, CH2, CH3, CH8, and CH9. A center of the four symmetric first-direction wavelength channels is located between CH5 and CH6, and spacings between the four symmetric first-direction wavelength channels are large. Therefore, the four-wave mixing effect generated is weak. Further, the N first-direction wavelength channels include four symmetric first-direction wavelength channels, namely, CH3, CH6, CH9, and CH12. A center of the four symmetric first-direction wavelength channels is located between CH7 and CH8, and spacings between the four symmetric first-direction wavelength channels are large. Therefore, the four-wave mixing effect generated is weak.

According to Solution 3, transmission of neither the six first-direction wavelength channels nor the six second-direction wavelength channels over the optical fiber can cause serious non-degenerate four-wave mixing (that is, non-degenerate four-wave mixing). According to theoretical simulation, the distribution according to Solution 3 can reduce performance deterioration caused by four-wave mixing by approximately 20 times compared with the distribution (configuration) in FIG. 3. For further effect analysis, refer to the descriptions of Solution 2. Details are not described herein again.

Solution 4: Spacings between six wavelength channels transmitted in a same direction are different. Specifically, first directions and second directions in three wavelength channel pairs in FIG. 6a or FIG. 6b are reversed.

Based on whether in a $1^{st}$ wavelength channel pair, a wavelength of a first-direction wavelength channel is longer or shorter than that of a second-direction wavelength channel, the following two solutions may also be included.

Solution 4.1: A wavelength of a first-direction wavelength channel is shorter than a wavelength of a second-direction wavelength channel.

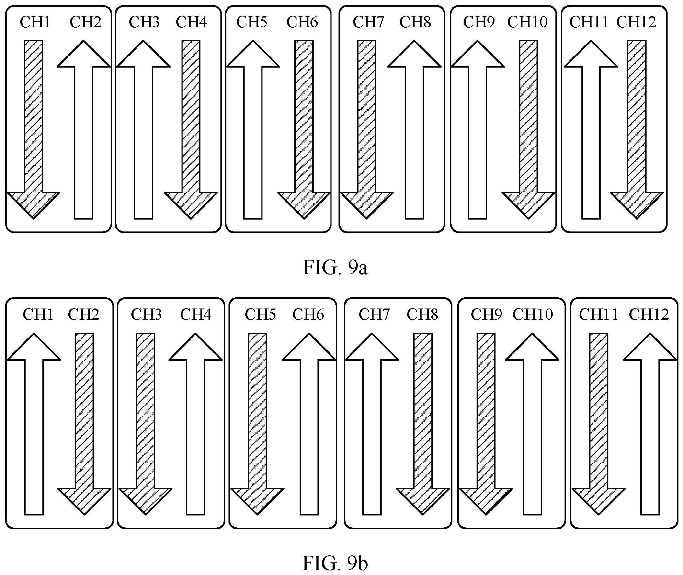

FIG. 9a is another diagram of wavelength channel distribution according to this application. The diagram of the wavelength channel distribution corresponds to Number 28 in Table 2. The six first-direction wavelength channels and the six second-direction wavelength channels are distributed in ascending order of wavelengths as follows: a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel. Alternatively, a distribution manner of the six first-direction wavelength channels is: CH1-CH4-CH6-CH7-CH10-CH12, and a distribution manner of the six second-direction wavelength channels is: CH2-CH3-CH5-CH8-CH9-CH11. For descriptions of a wavelength channel pair, refer to the descriptions in Solution 1.1. Details are not described herein again. It may be understood that FIG. 9a is equivalent to transposing the first direction of CH3 and the second direction of CH4 in FIG. 6a, transposing the first direction of CH5 and the second direction of CH6 in FIG. 6a, transposing the first direction of CH9 and the second direction of CH10 in FIG. 6a, and transposing the first direction of CH11 and the second direction of CH12 in FIG. 6a. Transposing the first direction and the second direction may be understood as that a wavelength channel is a first-direction wavelength channel in FIG. 6a, but is a second-direction wavelength channel in FIG. 9a.

For example, CH8, CH9, CH10, CH11, and CH12 are located in the ZDW region. In the ZDW region, second-direction wavelength channels include an $8^{th}$, a $9^{th}$, and a $12^{th}$ wavelength channels, and the three second-direction wavelength channels do not generate four-wave mixing; and first-direction wavelength channels include a $10^{th}$ and an $11^{th}$ wavelength channels, and the two first-direction wavelength channels do not generate the four-wave mixing. In addition, the six first-direction wavelength channels meet the following condition: The six first-direction wavelength channels exclude four symmetric first-direction wavelength channels whose center is located in the ZDW region, and also exclude three first-direction wavelength channels that have a same spacing and of which at least two are located in the ZDW region. The six second-direction wavelength channels meet the following condition: The six second-direction wavelength channels exclude four symmetric second-direction wavelength channels whose center is located in the ZDW region, and also exclude three second-direction wavelength channels that have a same spacing and of which at least two are located in the ZDW region. It may also be understood as that the distribution of the six first-direction wavelength channels and the six second-direction wavelength channels according to Solution 4.1 meets Condition 1 and Condition 2. Therefore, the distribution according to Solution 4.1 helps further mitigate or suppress a four-wave mixing effect.

It should be noted that, in the wavelength channels distributed according to Solution 4.1, the N first-direction wavelength channels include four symmetric first-direction wavelength channels, namely, CH4, CH5, CH10, and CH11. A center of the four symmetric first-direction wavelength channels is located between CH7 and CH8. Therefore, the four-wave mixing effect generated is weak. Similarly, the N second-direction wavelength channels also include four symmetric second-direction wavelength channels, namely, CH2, CH3, CH8, and CH9. A center of the four symmetric second-direction wavelength channels is located between CH5 and CH6. Therefore, the four-wave mixing effect generated is weak.

Solution 4.2: A wavelength of a first-direction wavelength channel is longer than a wavelength of a second-direction wavelength channel.

FIG. 9b is another diagram of wavelength channel distribution according to this application. The diagram of the wavelength channel distribution corresponds to Number 50 in Table 2. The six first-direction wavelength channels and the six second-direction wavelength channels are distributed in ascending order of wavelengths as follows: a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, a second-direction wavelength channel, a first-direction wavelength channel, and a second-direction wavelength channel. Alternatively, a distribution manner of the six first-direction wavelength channels is: CH2-CH3-CH5-CH8-CH9-CH11 and a distribution manner of the six second-direction wavelength channels is: CH1-CH4-CH6-CH7-CH10-CH12. It may be understood that FIG. 9b is equivalent to reversing the first direction of CH3 and the second direction of CH4 in FIG. 6b, reversing the first direction of CH5 and the second direction of CH6 in FIG. 6b, reversing the first direction of CH9 and the second direction of CH10 in FIG. 6b, and reversing the first direction of CH11 and the second direction of CH12 in FIG. 6b.

The distribution of the six first-direction wavelength channels and the six second-direction wavelength channels according to Solution 4.2 may also mitigate or suppress a four-wave mixing effect in an optical fiber. For detailed analysis, refer to the descriptions of Solution 4.1. Details are not described herein again.

It should be noted that, in the wavelength channels distributed according to Solution 4.2, the six second-direction wavelength channels include four symmetric second-direction wavelength channels, namely, CH4, CH5, CH10, and CH11. A center of the four symmetric second-direction wavelength channels is located between CH7 and CH8, and spacings between the four symmetric second-direction wavelength channels are large. Therefore, the four-wave mixing effect generated is weak. Similarly, the N first-direction wavelength channels include four symmetric first-direction wavelength channels, namely, CH2, CH3, CH8, and CH9. A center of the four symmetric first-direction wavelength channels is located between CH5 and CH6, and spacings between the four symmetric first-direction wavelength channels are large. Therefore, the four-wave mixing effect generated is weak.

According to Solution 4, transmission of neither the six first-direction wavelength channels nor the six second-direction wavelength channels over the optical fiber can cause serious non-degenerate four-wave mixing (that is, non-degenerate four-wave mixing). According to theoretical simulation, the distribution according to Solution 4 can reduce performance deterioration caused by four-wave mixing by approximately 20 times compared with the distribution (configuration) in FIG. 3. For further effect analysis, refer to the descriptions of Solution 2. Details are not described herein again.

It may be understood that the foregoing wavelength channel distribution for mitigating or suppressing the four-wave mixing is merely an example, and any wavelength channel distribution that can meet Condition 1 and/or Condition 2 and/or Condition 3 and/or Condition 4 may mitigate or suppress the four-wave mixing. For example, the wavelength channel distribution numbered 7/15/18/39/46/50 in Table 2 may also effectively mitigate or suppress the four-wave mixing effect of wavelength channels in the optical fiber.

2. First node and second node

In a possible implementation, the first node includes N first optical transceivers and one first multiplexer/demultiplexer, where a first end of the first multiplexer/demultiplexer is connected to the N first optical transceivers. The second node includes N second optical transceivers and one second multiplexer/demultiplexer, where a first end of the second multiplexer/demultiplexer is connected to the N second optical transceivers. A second end of the first multiplexer/demultiplexer is connected to an optical fiber between the first node and the second node, and a second end of the second multiplexer/demultiplexer is connected to the optical fiber between the first node and the second node. In other words, a second end of the first multiplexer/demultiplexer and a second end of the second multiplexer/demultiplexer may be connected through a feeder optical fiber. In this way, for transmission of 2N wavelength channels, only the N first optical transceivers and the N second optical transceivers are needed. This helps reduce a quantity of first optical transceivers and/or a quantity of second optical transceivers included in the optical communication system.

Further, optionally, a quantity of ports at the first end of the first multiplexer/demultiplexer and a quantity of ports at the second end of the first multiplexer/demultiplexer are N: 1, and a quantity of ports at the first end of the second multiplexer/demultiplexer and a quantity of ports at the second end of the second multiplexer/demultiplexer are N: 1. N ports of one first multiplexer/demultiplexer are used to send the N first-direction wavelength channels, and may receive the N second-direction wavelength channels. In other words, the N ports of the first multiplexer/demultiplexer implement transmission of the 2N wavelength channels. This helps save 50% ports of the first multiplexer/demultiplexer. Further, N ports of one second multiplexer/demultiplexer are used to send the N second-direction wavelength channels, and receive the N first-direction wavelength channels. In other words, the N ports of the second multiplexer/demultiplexer implement transmission of the 2N wavelength channels. This helps save 50% ports of the second multiplexer/demultiplexer.

For example, the quantity of ports at the first end of the first multiplexer/demultiplexer (or the second multiplexer/demultiplexer) is N, and the quantity of ports at the second end is 1; or the quantity of ports at the first end of the first multiplexer/demultiplexer (or the second multiplexer/demultiplexer) is n×N, where n is an integer greater than 1, and the quantity of ports at the second end is 2, or the like. It should be noted that, to avoid a case in which the first multiplexer/demultiplexer cannot work normally because one or more ports at the first end fail, the quantity of ports at the first end of the first multiplexer/demultiplexer (or the second multiplexer/demultiplexer) may alternatively be any integer greater than N and less than n×N. Similarly, the second end of the first multiplexer/demultiplexer (or the second multiplexer/demultiplexer) may alternatively include more than two ports.

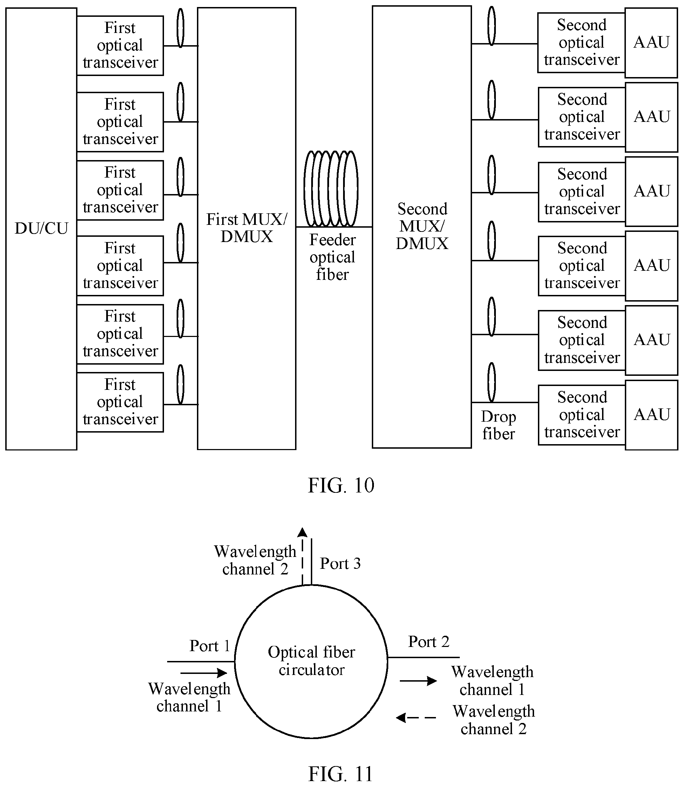

FIG. 10 is a diagram of a connection relationship between a first node and a second node according to this application. In this example, N=6. The first node includes six first optical transceivers and one first MUX/DMUX. Further, the first node may include a DU/CU. The second node includes one second MUX/DMUX and six second optical transceivers. Further, optionally, the second node may include six AAUs. A first end of the first MUX/DMUX is connected to the six first optical transceivers, a second end of the first MUX/DMUX is connected to a second end of the second MUX/DMUX through a feeder optical fiber, and a first end of the second MUX/DMUX may be connected to the six second optical transceivers through six drop fibers. The six first optical transceivers are all connected to the DU/CU. The six second optical transceivers may be connected to the AAUs.

It should be noted that the DU/CU, the first optical transceiver, and the first MUX/DMUX may be integrated as a whole, or any two of them may be integrated as a whole, or may be three independent physical entities. The AAU and the second optical transceiver may be integrated as a whole, or may be two independent physical entities.

In a possible implementation, one first optical transceiver corresponds to one first-direction wavelength channel and one second-direction wavelength channel, and the first-direction wavelength channel and the second-direction wavelength channel that correspond to the same first optical transceiver are adjacent to each other. Further, one second optical transceiver corresponds to one first-direction wavelength channel and one second-direction wavelength channel, and the first-direction wavelength channel and the second-direction wavelength channel that correspond to the same second optical transceiver are adjacent to each other. It may also be understood as that the first-direction wavelength channels and the second-direction wavelength channels that are adjacent to each other are used for bi-directional transmission between the first node and the second node, one first optical transceiver corresponds to one wavelength channel pair, and one second optical transceiver also corresponds to one wavelength channel pair. It may also be understood as that the first optical transceiver is configured to send the first-direction wavelength channel, and is configured to receive the second-direction wavelength channel belonging to a same wavelength channel pair. The second optical transceiver is configured to receive the first-direction wavelength channel and send the second-direction wavelength channel belonging to the same wavelength channel pair. Each first optical transceiver and each second optical transceiver are preconfigured with a corresponding first-direction wavelength channel and a corresponding second-direction wavelength channel. Bi-directional transmission is implemented by using a single fiber, so that both a quantity of feeder optical fibers and a quantity of drop fibers can be saved, thereby improving optical fiber resource utilization.

Solution 1.1 is used as an example. In a first direction: The DU/CU sends CH1, CH3, CH5, CH7, CH9, and CH11 via the six first optical transceivers. After being multiplexed by the first MUX, the wavelength channels are transmitted over the feeder optical fiber. After arriving at the second MUX/DMUX, the wavelength channels are demultiplexed by the second DMUX. Each wavelength channel is transmitted to a corresponding second optical transceiver, and then transmitted to a connected AAU via the second optical transceiver. In the second direction: The AAU sends CH2, CH4, CH6, CH8, CH10, and CH12 via the second optical transceivers. After being multiplexed by the second MUX, the wavelength channels are transmitted over the feeder optical fiber. After arriving at the first MUX/DMUX, the wavelength channels are demultiplexed by the first DMUX, and then output to the DU/CU. Transmission processes of other solutions are not listed one by one herein. Specifically, distribution of the six first-direction wavelength channels and the six second-direction wavelength channels may be replaced with a corresponding distribution solution.

In a possible implementation, the first optical transceiver may be, for example, a first bi-directional (Bi-directional, BiDi) optical module (or referred to as a BiDi transceiver module, or referred to as a BiDi bi-directional transmission module), or may be a first optical fiber circulator. The second optical transceiver may be, for example, a second BiDi optical module, or may be a second optical fiber circulator. Further, optionally, the first BiDi optical module and the second BiDi optical module may be the same. For ease of subsequent description, the first BiDi optical module and the second BiDi optical module may be collectively referred to as a BiDi optical module. The first optical fiber circulator and the second optical fiber circulator may also be the same. For ease of subsequent description, the first optical fiber circulator and the second optical fiber circulator may be collectively referred to as an optical fiber circulator.

The BiDi optical module is an optical module for both transmitting and receiving. The BiDi optical module has only one port, and filtering is performed by using a filter in the BiDi module, so that sending of one wavelength channel and receiving of another wavelength channel can be completed simultaneously. For example, a first node side sends a wavelength channel of 1310 nm and receives a wavelength channel of 1330 nm simultaneously. Wavelength channels used on the second node are exactly opposite to those on the first node side, that is, the second node sends the wavelength channel of 1330 nm and receives the wavelength channel of 1310 nm.

FIG. 11 is a diagram of a structure of an optical fiber circulator according to this application. The optical fiber circulator can implement bi-directional transmission of wavelength channels on the optical fiber side. The optical fiber circulator is a multi-port non-reciprocal optical device, where the wavelength channel can be transmitted in only one direction. For example, both receiving and sending are processed through two ports. If a wavelength channel 1 is input from a port 1, the wavelength channel 1 is output from a port 2. If a wavelength channel 2 is input from the port 2, the wavelength channel 2 is output from a port 3. When the wavelength channel 2 is input from the port 2, a loss is large when the wavelength channel 2 is output from the port 1. Similarly, when the wavelength channel 1 is input from the port 3, a loss is large when the wavelength channel 1 is output from the port 1 or the port 2. The optical fiber circulator has a simple structure, and can be connected to a DU/CU or an AAU through only one optical fiber connector, thereby helping reduce a size of an optical communication system.

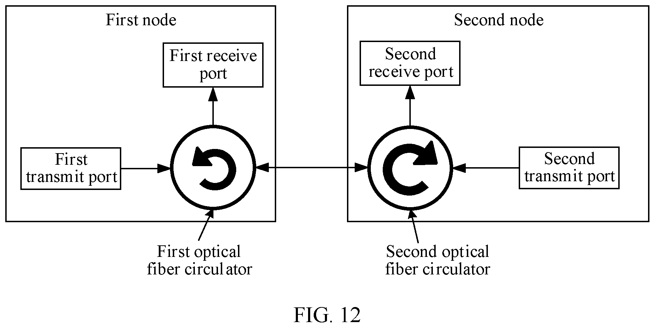

FIG. 12 is a diagram of a connection relationship between a first optical fiber circulator and a second optical fiber circulator according to this application. A first optical transceiver may include a first transmit port and a first receive port, a second optical transceiver may include a second transmit port and a second receive port, three ports of the first optical fiber circulator are respectively connected to the first transmit port, the first receive port, and the second optical fiber circulator, and three ports of the second optical fiber circulator are respectively connected to the second transmit port, the second receive port, and the first optical fiber circulator.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between associated objects. In a formula of this application, the character "/" indicates a "division" relationship between associated objects. In this application, a symbol "(a, b)" represents an open interval with a range greater than a and less than b, "[a, b]" represents a closed interval with a range greater than or equal to a and less than or equal to b, "(a, b]" represents a half-open and half-closed interval with a range greater than a and less than or equal to b, and "[a, b)" represents a half-open and half-closed interval with a range greater than or equal to a and less than b. In addition, in this application, the term "for example" is used to represent giving an example, an illustration, or a description. An embodiment or design solution described as an "example" in this application should not be explained as being more preferred or having more advantages than another embodiment or design solution. Alternatively, it may be understood that the word "example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects without having to describe a specific order or sequence. In addition, the terms "include", "have", and a variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

**Claims**

1. An optical communication system, comprising a first node, a second node, and an optical fiber used to connect the first node and the second node, wherein a zero-dispersion wavelength ZDW of the optical fiber belongs to a ZDW region; and
the optical fiber is configured for transmission of N first-direction wavelength channels and N second-direction wavelength channels, wherein N is an integer greater than 2; at least two first-direction wavelength channels and at least one second-direction wavelength channel are located in the ZDW region, or at least two second-direction wavelength channels and at least one first-direction wavelength channel are located in the ZDW region, and the first-direction wavelength channel and the second-direction wavelength channel that are in the ZDW region are mixedly distributed; and the first-direction wavelength channel is a wavelength channel sent by the first node to the second node, and the second-direction wavelength channel is a wavelength channel sent by the second node to the first node.

2. The system according to claim 1, wherein distribution of the N first-direction wavelength channels and the N second-direction wavelength channels meets any one or more of the following:

the N first-direction wavelength channels exclude four symmetric first-direction wavelength channels whose center is located in the ZDW region; and
the N second-direction wavelength channels exclude four symmetric second-direction wavelength channels whose center is located in the ZDW region.

3. The system according to claim 1 or 2, wherein the distribution of the N first-direction wavelength channels and the N second-direction wavelength channels meets any one or more of the following:

the N first-direction wavelength channels exclude three first-direction wavelength channels that have a same spacing and of which at least two are located in the ZDW region; and
the N second-direction wavelength channels exclude three second-direction wavelength channels that have a same spacing and of which at least two are located in the ZDW region.

4. The system according to any one of claims 1 to 3, wherein a smallest frequency spacing between the N first-direction wavelength channels and the N second-direction wavelength channels that are mixedly distributed is equal to 800 gigahertz.

5. The system according to any one of claims 1 to 3, wherein a smallest frequency spacing between the N first-direction wavelength channels and the N second-direction wavelength channels that are mixedly distributed is equal to 400 gigahertz.

6. The system according to any one of claims 1 to 5, wherein the N first-direction wavelength channels have a same wavelength spacing, and the N second-direction wavelength channels have a same wavelength spacing.

7. The system according to claim 6, wherein N=6; and
the N first-direction wavelength channels and the N second-direction wavelength channels are distributed in ascending order of wavelengths as follows:

a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, and a second-direction wavelength channel; or
a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, a first-direction wavelength channel, a second-direction wavelength channel, and a first-direction wavelength channel.

8. The system according to any one of claims 1 to 5, wherein the N first-direction wavelength channels have different wavelength spacings; and/or the N second-direction wavelength channels have different wavelength spacings.

9. The system according to claim 8, wherein N=6; and
the N first-direction wavelength channels and the N second-direction wavelength channels are distributed in ascending order of wavelengths as follows:

a first-direction wavelength channel, a second-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, a second-direction wavelength channel, a first-direction wavelength channel, and a second-direction wavelength channel; or

a second-direction wavelength channel, a first-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel.

10. The system according to claim 8, wherein N=6; and
the N first-direction wavelength channels and the N second-direction wavelength channels are distributed in ascending order of wavelengths as follows:

a first-direction wavelength channel, a second-direction wavelength channel, a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, and a second-direction wavelength channel; or

a second-direction wavelength channel, a first-direction wavelength channel, a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, and a first-direction wavelength channel.

11. The system according to claim 8, wherein N=6; and
the N first-direction wavelength channels and the N second-direction wavelength channels are distributed in ascending order of wavelengths as follows:

a first-direction wavelength channel, a second-direction wavelength channel, a second-direction wavelength channel, a first-direction wavelength channel, a second-direction wavelength channel, a first-direction wavelength channel, a first-direction wavelength channel, a second-direction wavelength channel, a second-direction wavelength channel, a first-direction wavelength channel, a second-direction wavelength channel, and a first-direction wavelength channel; or

a second-direction wavelength channel, a first-direction wavelength channel, a first-direction wavelength channel, a second-direction wavelength channel, a first-direction wavelength channel, a second-direction wavelength channel, a second-direction wavelength channel, a first-direction wavelength channel, a first-direction wavelength channel, a second-direction wavelength channel, a first-direction wavelength channel, and a second-direction wavelength channel.

12. The system according to any one of claims 7 and 9 to 11, wherein five wavelength channels with longest wavelengths in the six first-direction wavelength channels and the six second-direction wavelength channels that are mixedly distributed are located in the ZDW region.

13. The system according to any one of claims 1 to 12, wherein the optical fiber comprises a standard single-mode fiber, and a range of a ZDW region to which a ZDW of the standard single-mode fiber belongs is [1300 nanometers, 1324 nanometers].

14. The system according to any one of claims 1 to 13, wherein the first node comprises N first optical transceivers and one first multiplexer/demultiplexer, and the second node comprises N second optical transceivers and one second multiplexer/demultiplexer, wherein

a first end of the first multiplexer/demultiplexer is connected to the N first optical transceivers, and a second end of the first multiplexer/demultiplexer is connected to an optical fiber between the first node and the second node; and

a first end of the second multiplexer/demultiplexer is connected to the N second optical transceivers, and a second end of the second multiplexer/demultiplexer is connected to the optical fiber between the first node and the second node.

15. The system according to claim 14, wherein one first optical transceiver corresponds to one first-direction wavelength channel and one second-direction wavelength channel, and the first-direction wavelength channel and the second-direction wavelength channel that correspond to the same first optical transceiver are adjacent to each other; and/or one second optical transceiver corresponds to one first-direction wavelength channel and one second-direction wavelength channel, and the first-direction wavelength channel and the second-direction wavelength channel that correspond to the same second optical transceiver are adjacent to each other.

16. The system according to claim 14 or 15, wherein the first optical transceiver comprises a first optical fiber circulator, and the second optical transceiver comprises a second optical fiber circulator.

17. The system according to any one of claims 14 to 16, wherein a quantity of ports at the first end of the first multiplexer/demultiplexer and a quantity of ports at the second end of the first multiplexer/demultiplexer are N: 1, a quantity of ports at the first end of the second multiplexer/demultiplexer and a quantity of ports at the second end of the second multiplexer/demultiplexer are N: 1, and N is a positive integer.

18. The system according to any one of claims 1 to 17, wherein the first node comprises a distributed unit DU and/or a central unit CU, and the second node comprises an active antenna unit AAU.

19. A first node, comprising:

N first optical transceivers, wherein the N first optical transceivers are configured to send N first-direction wavelength channels and receive N second-direction wavelength channels, and N is an integer greater than 2, wherein

the N first-direction wavelength channels and the N second-direction wavelength channels are transmitted over an optical fiber, a zero-dispersion wavelength ZDW of the optical fiber belongs to a ZDW region, at least two first-direction wavelength channels or at least two second-direction wavelength channels are located in the ZDW region, the first-direction wavelength channel and the second-direction wavelength channel that are in the ZDW region are mixedly distributed, the first-direction wavelength channel is a wavelength channel sent by the first node to a second node, and the second-direction wavelength channel is a wavelength channel sent by the second node to the first node.

20. The node according to claim 19, wherein the first node further comprises a first multiplexer/demultiplexer, a first end of the first multiplexer/demultiplexer is connected to the N first optical transceivers, and a second end of the first multiplexer/demultiplexer is configured to connect to the optical fiber.

21. The node according to claim 19 or 20, wherein one first optical transceiver corresponds to one first-direction wavelength channel and one second-direction wavelength channel, and the first-direction wavelength channel and the second-direction wavelength channel that correspond to the same first optical transceiver are adjacent to each other.

22. The node according to any one of claims 19 to 21, wherein the first optical transceiver comprises a first optical fiber circulator.

23. The node according to any one of claims 20 to 22, wherein a quantity of ports at the first end of the first multiplexer/demultiplexer and a quantity of ports at the second end of the first multiplexer/demultiplexer are N: 1.

FIG. 1a

FIG. 1b

Radio unit 2021

Equipment
room

Baseband
unit 2011

Remote-site
apparatus 202

Active
device 2013

Feeder optical fiber

Server   Central office   MUX/DMUX 2012
         apparatus 201

MUX/DMUX 2022

FIG. 2a

FIG. 2b

FIG. 3

FIG. 4

FIG. 5

Wavelength channel pair

CH1  CH2   CH3  CH4   CH5   CH6   CH7   CH8   CH9  CH10   CH11 CH12

$\Delta$   $\Delta_{21}$

$\Delta_{11}$

FIG. 6a

CH1  CH2   CH3  CH4   CH5   CH6   CH7   CH8   CH9  CH10   CH11 CH12

$\Delta$   $\Delta_{11}$

$\Delta_{21}$

FIG. 6b

FIG. 7a

FIG. 7b

FIG. 8a

FIG. 8b

CH1 CH2 CH3 CH4 CH5 CH6 CH7 CH8 CH9 CH10 CH11 CH12

FIG. 9a

CH1 CH2 CH3 CH4 CH5 CH6 CH7 CH8 CH9 CH10 CH11 CH12

FIG. 9b

FIG. 10

FIG. 11

First node

First receive port

First transmit port

First optical fiber circulator

Second node

Second receive port

Second transmit port

Second optical fiber circulator

FIG. 12

## INTERNATIONAL SEARCH REPORT

| International application No. |
|---|
| **PCT/CN2023/082914** |

| A. | CLASSIFICATION OF SUBJECT MATTER |
|---|---|
| | H04B10/2563(2013.01)i; H04J14/02(2006.01)i |

According to International Patent Classification (IPC) or to both national classification and IPC

| B. | FIELDS SEARCHED |
|---|---|

Minimum documentation searched (classification system followed by classification symbols)

IPC:H04B,H04J

Documentation searched other than minimum documentation to the extent that such documents are included in the fields searched

Electronic data base consulted during the international search (name of data base and, where practicable, search terms used)

CNTXT, ENTXTC, VEN, ENTXT, CNKI: 波分复用, 间隔, 零色散波长, 零色散频率, 四波混频, WDM, distance, gap, zero, dispersion, wavelength, frequency, FWM, Four wave mixing

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP H11186969 A (NIPPON TELEGRAPH & TELEPHONE CORPORATION) 09 July 1999 (1999-07-09)<br>    description, paragraphs [0006]-[0024], and figures 1-7 | 1-23 |
| A | JP 2000013361 A (NIPPON TELEGRAPH & TELEPHONE CORPORATION) 14 January 2000 (2000-01-14)<br>    entire document | 1-23 |
| A | US 2009290879 A1 (ARRIS) 26 November 2009 (2009-11-26)<br>    entire document | 1-23 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 July 2023** | **08 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

# EP 4 478 630 A1

**INTERNATIONAL SEARCH REPORT**
**Information on patent family members**

International application No.

**PCT/CN2023/082914**

| Patent document cited in search report | | | Publication date (day/month/year) | Patent family member(s) | | | Publication date (day/month/year) |
|---|---|---|---|---|---|---|---|
| JP | H11186969 | A | 09 July 1999 | None | | | |
| JP | 2000013361 | A | 14 January 2000 | JP | 3370949 | B2 | 27 January 2003 |
| US | 2009290879 | A1 | 26 November 2009 | US | 8260138 | B2 | 04 September 2012 |

Form PCT/ISA/210 (patent family annex) (July 2022)

## EP 4 478 630 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210275920